# EUROPEAN PATENT APPLICATION

(11) **EP 1 868 206 A1**
(43) Date of publication of application: **19.12.2007**
(21) Application number: 07252066.1
(22) Date of filing: 18.05.2007
(51) Int. Cl.: G11B 27/32, G11B 27/034, H04N 7/26

(54) **Information processing apparatus and information processing method**

(30) Priority: 13.06.2006 JP 2006163590
(71) Applicant: Sony Corporation, Minato-ku Tokyo 108-0075 (JP)
(72) Inventor: Koyabu, Kyohei, Sony Corporation, Tokyo 108-0075 (JP); Shibata, Shojiro, Sony Corporation, Tokyo 108-0075 (JP); Tsunashima, Shuji, Sony Corporation, Tokyo 108-0075 (JP); Shirane, Keita, Sony Corporation, Tokyo 108-0075 (JP); Tanaka, Ikko, Sony Corporation, Tokyo 108-0075 (JP)
(74) Representative: Mills, Julia

(57) **Abstract**

An information processing apparatus controls first and second coded streams to be output in a form in which the first and second coded streams are connected to each other. The apparatus includes an operation-input acquiring unit for acquiring an operation input representing a playback portion of both coded streams to be played back, a storage unit for storing coded streams including both coded streams, a transfer-control unit for controlling transfer, to the storage unit, of portions of both coded streams for the operation input acquired by the operation-input acquiring unit, a coded stream necessary for decoding the portions of both coded streams for the acquired operation input, a decoding unit for decoding both coded streams stored in the storage unit to generate image data, and a commanding unit for commanding an image-data output time at which the image data generated by the decoding unit is output.

## Description

The present invention contains subject matter related to Japanese Patent Application JP 2006-163590 filed in the Japanese Patent Office on June 13, 2006.

The present invention relates to the field of information processing apparatuses and methods, and, in particular, to an information processing apparatus and method suitable for use in editing coded streams.

### 2. Description of the Related Art

A technology (for example, Japanese Unexamined Patent Application Publication No. 10-98713) is known in which, when different MPEG (Moving Picture Experts Group) streams, obtained by encoding using interframe correlation, are connected and edited, editing for connecting the different streams can be executed by using a plurality of decoders to decode only connecting portions of the streams, that is, GOPs (group of pictures) including editing points, connecting baseband-image-data outputs obtained by decoding from the decoders, with the baseband-image-data outputs switched at a desired position, and re-encoding the connected baseband-image-data outputs.

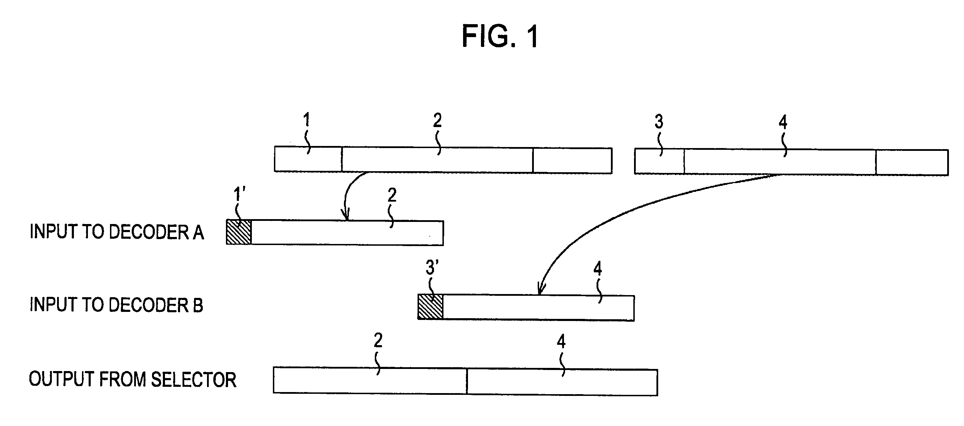

As shown in Fig. 1, in the case of connecting a clip 2 included in a first stream used as a material for an edited image and a clip 4 included in a second stream used as a material for the edited image, when a portion 1 of the first stream that is not displayed includes frames necessary for decoding the frames of the clip 2, a frame group 1' which is included in the portion 1 and which is necessary for reference and the clip 2 are input and decoded in a decoder A. The decoded data is input to a selector. When a portion 3 of the second stream includes frames necessary for decoding the frames of the clip 4, a frame group 3' which is included in the portion 3 and which is necessary for reference and the clip 4 are input and decoded in a decoder B. The decoded data is input to the selector. The selector switches its outputs to connect baseband image data corresponding to the clip 2 (included in the first stream used as the material for the edited image) and baseband image data corresponding to the clip 4 (included in the second stream used as the material for the edited image), and supplies the connected data to an encoder. The connected data supplied can be re-encoded and output by the encoder.

In the above technology of the related art, after a GOP including a connected portion is temporarily decoded, it takes a time to re-encode the connected portion. Thus, it may not be said that the above technology of the related art is suitable for a case such as when the position of a connecting point is often altered for editing or the like and the position of the connection point is confirmed.

In addition, in the above technology of the related art, a plurality of decoders are provided and assigned to streams used as video materials, and outputs from the decoders are controlled to be switched by an external selector or the like. That is, the above technology of the related art performs complicated control because a plurality of decoders are necessary, and it is necessary to control input of streams to the decoders and output timing of baseband image data obtained by decoding. In particular, in a case in which random playback, such as scrub playback, is performed, there is a possibility of displaying video that should not be displayed unless the selector is controlled for the output from each decoder. Accordingly, the above case needs complicated processing in which the selector is controlled depending on timing that each decoder outputs baseband image data to be used for display. Thus, the complicated processing slows a response from user's input of an operation for specifying the connecting point until output of connected streams for playback.

The present invention has been made in view of the above-described circumstances, and it is desirable to output, without performing complicated control, a played-back image obtained when coded streams are connected at a desired editing point.

Various respective aspects and features of the invention are defined in the appended claims. Features from the dependent claims may be combined with features of the independent claims as appropriate and not merely as explicitly set out in the claims.

According to an embodiment of the present invention, there is provided an information processing apparatus for controlling first and second coded streams to be output in a form in which the first and second coded streams are connected to each other. The information processing apparatus includes operation-input acquiring means for acquiring an operation input representing a playback portion of the first and second coded streams to be played back, storage means for storing coded streams including the first and second coded streams, transfer-control means for controlling transfer, to the storage means, of portions of the first and second coded streams for the operation input acquired by the operation-input acquiring means, a coded stream necessary for decoding the portions of the first and second coded streams for the acquired operation input, decoding means for decoding the first and second coded streams stored in the storage means to generate image data, and commanding means for commanding an image-data output time at which the image data generated by the decoding means is output.

The information processing apparatus may further include control-information generating means for generating control information representing the playback portion of the first and second coded streams on the basis of the operation input acquired by the operation-input acquiring means.

In the information processing apparatus, each of the first and second coded streams may include groups of pictures, and the transfer-control means may control the transfer of the first and second coded streams in units of groups of pictures.

The information processing apparatus may further include transfer-timing control means for controlling transfer timing by predicting the image-data output time commanded by the commanding means so that the first and second coded streams are transferred prior to the commanding of the image-data output time, and decoding control means for controlling the decoding means to preferentially decode a reference picture that is referred to when, in the first and second coded streams stored in the storage means, a picture to be decoded is decoded.

The transfer control means may control the transfer of the first and second coded streams so that the first and second coded streams are transferred as transfer data in predetermined transfer units to the storage means, and, when the number of pictures to be displayed in the transfer data whose transfer to the storage means is controlled is not greater than a predetermined number of pictures, the transfer-timing control means may control the transfer timing so that next transfer data is transferred to the storage means.

The transfer-timing control means may determine transfer units in which the first and second coded streams are transferred to the storage means.

In the information processing apparatus, each of the first and second coded streams may include groups of pictures including B pictures, and, when a picture based on the image data whose output time is commanded by the commanding means is included in a B picture that is decoded by referring to a picture included in a second group of pictures different from a first group of pictures including the picture based on the image data, the transfer control means may determine, as transfer units for transfer to the storage means, a B picture that is decoded by referring to a picture included in the second group of pictures, a reference picture necessary for decoding the B picture, and the second group of pictures, the B picture and reference picture being included in the first group of pictures.

When the picture based on the image data whose output time is commanded by the commanding means is included in the B picture that is decoded by referring to the picture included in the second group of pictures different from the first group of pictures including the picture based on the image data, and each of the first group of pictures and the second group of pictures is not supplied to the storage means, the transfer control means may determine, as transfer units for transfer to the storage means, a B picture that is decoded by referring to a picture included in the second group of pictures, a reference picture necessary for decoding the B picture, and the second group of pictures, the B picture and reference picture being included in the first group of pictures.

The first and second coded streams may be streams encoded on the basis of a Moving Picture Experts Group standard.

According to another embodiment of the present invention, there is provided an information processing method for controlling first and second coded streams to be output in a form in which the first and second coded streams are connected to each other. The information processing method includes the steps of acquiring an operation input representing a playback portion of the first and second coded streams to be played back, storing the first and second coded streams, controlling transfer, to storage means, of portions of the first and second coded streams for the acquired operation input, and a coded stream necessary for decoding the portions of the first and second coded streams for the acquired operation input, generating image data by decoding the first and second coded streams stored, and commanding an image-data output time at which the generated image data is output.

According to an embodiment of the present invention, a user's operation input that represents a playback portion of first and second coded streams to be output for playback is acquired, and, on the basis of the acquired operation input, data that includes at least the playback portion of the first and second coded streams and a coded stream necessary for decoding the playback portion is stored. The stored data is decoded, and a time at which the decoded data is output is commanded.

A network represents a mechanism in which, with at least two apparatuses connected, information can be conveyed from one apparatus to another apparatus. Apparatuses that perform communication through the network may be separate, and may be internal blocks included in a single apparatus.

In addition, types of communication may include, not only wireless communication and wired communication, but also communication in which both wireless communication and wired communication are used, that is, communication in which wireless communication is performed in an interval and wired communication is performed in another interval. The types of communication may also include communication in which wired communication is used as communication from an apparatus to a different apparatus and wireless communication is used as communication from the different apparatus to the apparatus.

A playback apparatus may be an independent apparatus and may be a block for performing playback in each of a recording/playback apparatus and an editing apparatus.

As described above, according to an embodiment of the present invention, decoded data can be output. In particular, editing can be performed by a single decoder since, on the basis of a user's operation input, data that includes at least a playback portion of first and second coded streams to be output and a codes stream necessary for decoding the playback portion is supplied to a decoder.

The invention will now be described by way of example with reference to the accompanying drawings, throughout which like parts are referred to by like references, and in which: Fig. 1 is an illustration of editing of the related art;
Fig. 2 is a block diagram showing the configuration of a playback apparatus;
Fig. 3 is an illustration of clip playback;
Fig. 4 is an illustration of reference images;
Fig. 5 is a functional block diagram showing CPU functions;
Fig. 6 is a block diagram showing the configuration of a decoder;
Fig. 7 is an illustration of header information in a GOP;
Fig. 8 is an illustration of a stream buffer GOP queue.
Fig. 9 is an illustration of a stored anchor frame and an unstored anchor frame;
Fig. 10 is an illustration of a stream buffer GOP queue;
Fig. 11 is an illustration of a bank configuration;
Fig. 12 is an illustration of a GOP stored anchor queue;
Figs. 13A and 13B are illustrations of management of stored anchor banks;
Figs. 14A and 14B are illustrations of management of stored anchor banks;
Fig. 15 is an illustration of a GOP transfer range and decoding;
Fig. 16 is an illustration of a GOP transfer range and decoding;
Fig. 17 is an illustration of a GOP transfer range and decoding;
Fig. 18 is an illustration of a GOP transfer range and decoding;
Fig. 19 is a flowchart illustrating a process by the CPU 11 shown in Fig. 2;
Fig. 20 is a flowchart illustrating a process by the CPU 20 shown in Fig. 2;
Fig. 21 is a flowchart illustrating a display-transfer-unit determination process;
Fig. 22 is a flowchart illustrating an advancing-transfer-unit determination process;
Fig. 23 is a flowchart illustrating a transfer-completion-transmission process;
Fig. 24 is a flowchart illustrating the transfer-completion-transmission process;
Fig. 25 is a flowchart illustrating the transfer-completion-transmission process;
Fig. 26 is a flowchart illustrating the transfer-completion-transmission process;
Fig. 27 is an illustration of specific examples of processing;
Fig. 28 is a flowchart illustrating an output-range-specifying-command setting process;
Fig. 29 is a functional block diagram showing CPU functions; and
Fig. 30 is a block diagram showing the configuration of a personal computer.

An embodiment of the present invention is described below with reference to the accompanying drawings.

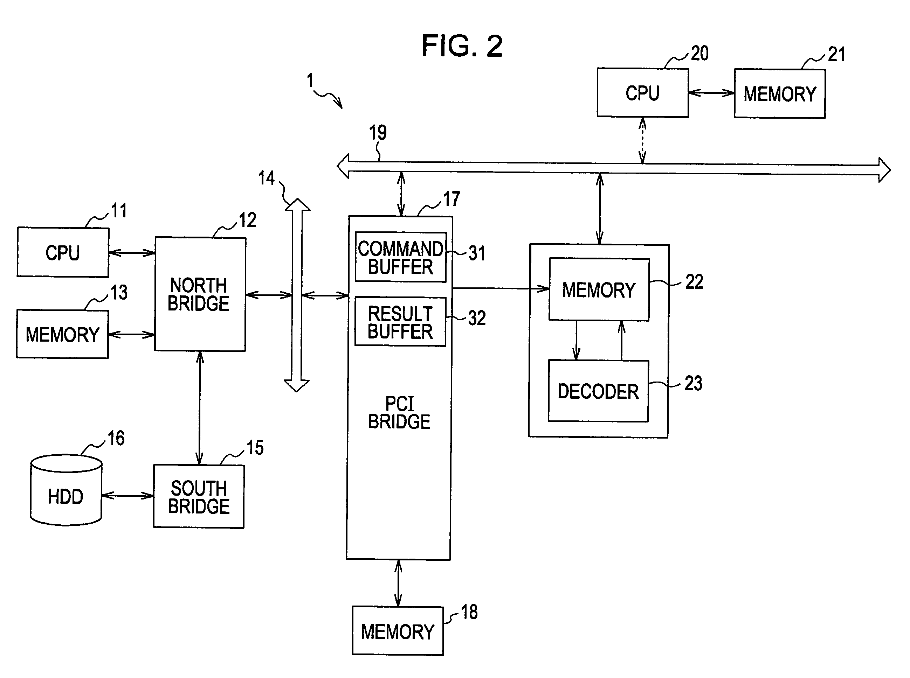

Fig. 2 is a block diagram showing a hardware configuration of a playback apparatus 1.

A CPU (central processing unit) 11 is connected to a north bridge 12. For example, the CPU 11 controls processing such as reading of data stored in an HDD 16, schedules decoding executed by a CPU 20, and generates and outputs commands for commanding a start, alteration, or termination of processing such as decoding and control of display output. The north bridge 12 is connected to a PCI (peripheral component interconnect/interface) bus 14. For example, under the control of the CPU 11, the north bridge 12 is supplied with the data stored in the HDD 16, and supplies the data to a memory 18 through the PCI bus 14 and a PCI bridge 17. The north bridge 12 is also connected to a memory 13 and exchanges data necessary for processing by the CPU 11 with the memory 13.

The memory 13 is, for example, a high-speed accessible memory, such as a DDR (double data rate) memory, for storing data necessary for processing to be executed by the CPU 11. A south bridge 15 controls data writing and reading. The HDD 16 stores compression-coded stream data.

The PCI bridge 17 includes therein a command buffer 31 and a result buffer 32, and connects to the memory 18, which buffers stream data read from the HDD 16 under the control of the CPU 11. Under the control of the CPU 11, the PCI bridge 17 can supply and store the stream data read from the HDD 16 in the memory 18. In addition, under the control of the CPU 20, the PCI bridge 17 can read stream data stored in the memory 18 and can supply the read stream data to a memory 22 connected to a decoder 23. The PCI bridge 17 also controls exchange of control signals corresponding to commands or results through the PCI bus 14 or a control bus 19.

A command can be written in the command buffer 31 by the CPU 11 through the north bridge 12 and the PCI bus 14, and the written command can be read from the command buffer 31 by the CPU 20 through the control bus 19. In addition, a result for a command can be written in the result buffer 32 by the CPU 20 through the control bus 19, and the written result can be read from the result buffer 32 through the north bridge 12 and the PCI bus 14.

Under the control of the PCI bridge 17, the memory 18 can store compression-coded stream data that is read from the HDD 16. The memory 18 is formed by, for example, an SDRAM (synchronous dynamic random access memory).

The CPU 20 reads the command written in the command buffer 31 of the PCI bridge 17 through the control bus 19, and controls, on the basis of the command, processes that are executed by the PCI bridge 17, the memory 22, and the decoder 23. A memory 21 stores data necessary for processing of the CPU 20.

Under the control of the CPU 20, the decoder 23 outputs an uncompressed video signal by decoding the supplied compression-coded stream data. The decoder 23 can decode one frame in a time sufficiently shorter than a display time for displaying one frame, where the time is, for example, approximately 1/4 or 1/3 of the display time. The decoder 23 connects to the memory 22. The memory 22 can store the compression-coded stream data supplied from the PCI bridge 17 or the uncompressed video signal obtained by decoding of the decoder 23. In addition, the decoder 23 may be provided as a separate device that is not included in the playback apparatus 1.

The playback apparatus 1 shown in Fig. 2 may be formed as a single apparatus or may be formed by a plurality of apparatuses. For example, by configuring, in the playback apparatus 1 in Fig. 2, the CPU 11, the north bridge 12, the memory 13, the south bridge 15, and the HDD 16 so as to be included in the configuration of a personal computer, and providing an expansion card, such as a PCI card or PCI-Express card, or expansion board, with functions of the PCI bus 14, the PCI bridge 17, the memory 18, the control bus 19, the CPU 20, the memory 21, and the memory 22, and the decoder 23, the personal computer can function as the playback apparatus 1 by mounting the expansion card or board to the personal computer. Alternatively, the playback apparatus 1 may be configured, with the above functional blocks further divided into a plurality of apparatuses.

Next, an operation of the playback apparatus 1 is described below.

The HDD 16 stores compressed video data that is obtained in a Long GOP format in MPEG.

Only portions of continuous video are cut out as "clips". Collecting a plurality of such clips and playing back the collected clips so as to look continuous video of a single scene are called "clip playback".

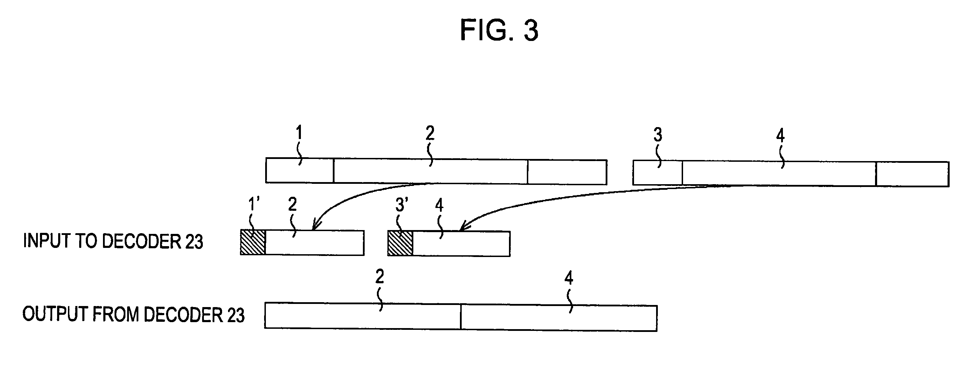

Specifically, as shown in Fig. 3, in the case of connecting a clip 2 included in a first stream used as a material for an edited image and a clip 4 included in a second stream used as a material for the edited image, when a portion 1 of the first stream that is not displayed (not included in the clip 2) includes frames necessary for decoding the frames of the clip 2, a frame group 1' necessary for reference and the clip 2 are input and decoded in the decoder 23. In addition, when a portion 3 of the second stream that is not displayed (not included in the clip 4) includes frames necessary for decoding the frames of the clip 4, a frame group 3' necessary for reference and the clip 4 are input and decoded in the decoder 23. The decoder 23 can output connected data obtained by connecting baseband image data corresponding to the clip 2 included in the first stream (used as the material for the edited image) and baseband image data corresponding to the clip 4 included in the second stream (used as the material for the edited image).

At this time, a display output is not generated depending on each clip discontinuity. However, there are frames that need to be decoded, that is, the frame groups 1' and 3' shown in Fig. 3.

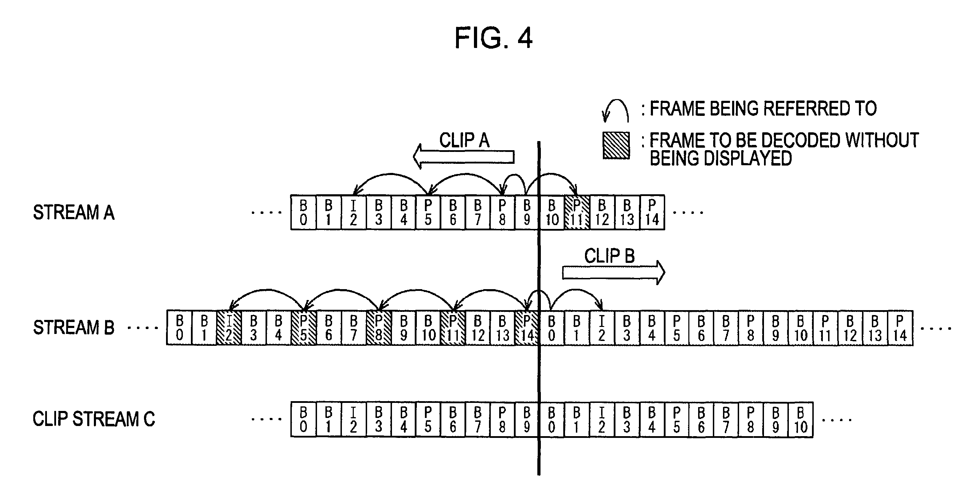

As shown in Fig. 4, when a GOP of stream A has a clip discontinuity between pictures B9 and B10, and pictures up to picture B9 form clip A, in order to decode picture B9 at the end of the GOP of clip A, picture P11 that is not included in clip A is necessary. When stream B has a clip gap between a GOP and the next GOP, and picture B0 at the start of the next GOP and the subsequent pictures form clip B, in order to decode pictures B0 and B1 at the start of the GOP of clip B, all I and P pictures in the previous GOP that are not included in clip B are necessary. In other words, a maximum number of frames which need to be decoded in order to create a reference image for a frame to be displayed and which are not displayed is six.

The CPU 11 uses the north bridge 12 to control the south bridge 15 to read predetermined portions of a plurality of compression-coded stream data items from the HDD 16 on the basis of a stream for use in clip playback and an operation input representing a playback range in clip playback which are supplied from an operation input unit (not shown). The CPU 11 uses the PCI bus 14 and the PCI bridge 17 to supply and store the read predetermined portions in the memory 18. In addition, the CPU 11 uses the north bridge 12 and the PCI bus 14 to write, in the command buffer 31 of the PCI bridge 17, a GOP-transfer-completion command representing completion of transfer of data in a GOP to the memory 18, an output-range-specifying command representing a display range of a transferred GOP, that is, a frame range to be displayed in clip playback, information representing a playback speed (including playback direction information), a command to initiate decoding, and a command to initiate display.

The CPU 20 determines decoding and output (display) schedules of the compression-coded stream data on the basis of the commands written in the command buffer 31 of the PCI bridge 17. Specifically, the CPU 20 determines timing for transferring the compression-coded stream data from the memory 18 to the memory 22, timing for inputting the compression-coded stream data from the memory 22 to the decoder 23, timing for performing decoding for each frame, setting of a bank position of a reference image, assignment of a bank memory in a decoding mode, and output of a decoded picture, that is, display timing.

The CPU 20 controls the PCI bridge 17 to supply the compression-coded stream data stored in the memory 18 to the memory 22 and the decoder 23 on the basis of the determined schedule.

The CPU 20 controls the decoder 23 to decode the compression-coded stream data supplied through the memory 22. The decoder 23 generates and outputs uncompressed baseband image data by decoding the compression-coded stream data supplied.

Specifically, under the control of the CPU 20, the decoder 23 preferentially decodes I and P pictures of a GOP supplied to the memory 22, and stores the obtained uncompressed baseband image data in the memory 22. Since the decoder 23 can decode one frame in a time sufficiently shorter than a display time for displaying one frame, while processing for decoding a frame to be displayed is not performed, the decoder 23 preferentially decodes I and P pictures of the GOP stored in the memory 22 and stores the obtained uncompressed baseband image data in the memory 22. Thus, when a display command is transmitted from the CPU 11, baseband image data corresponding to the stored I and P pictures can be output, or high speed decoding can be performed by using the pictures as reference images. Specifically, when the decoder 23 receives a display command to display a frame from the CPU 11, if the memory 22 stores uncompressed baseband image data for use in display, the decoder 23 outputs the stored uncompressed baseband image data, while, if the memory 22 stores no uncompressed baseband image data, by decoding the frame to be displayed by using the stored uncompressed baseband image data as a reference image, if necessary, the decoder 23 generates and outputs uncompressed baseband image data. Although all I and P pictures included in the GOP may preferentially be decoded, only some of the I and P pictures included in the GOP may preferentially be decoded.

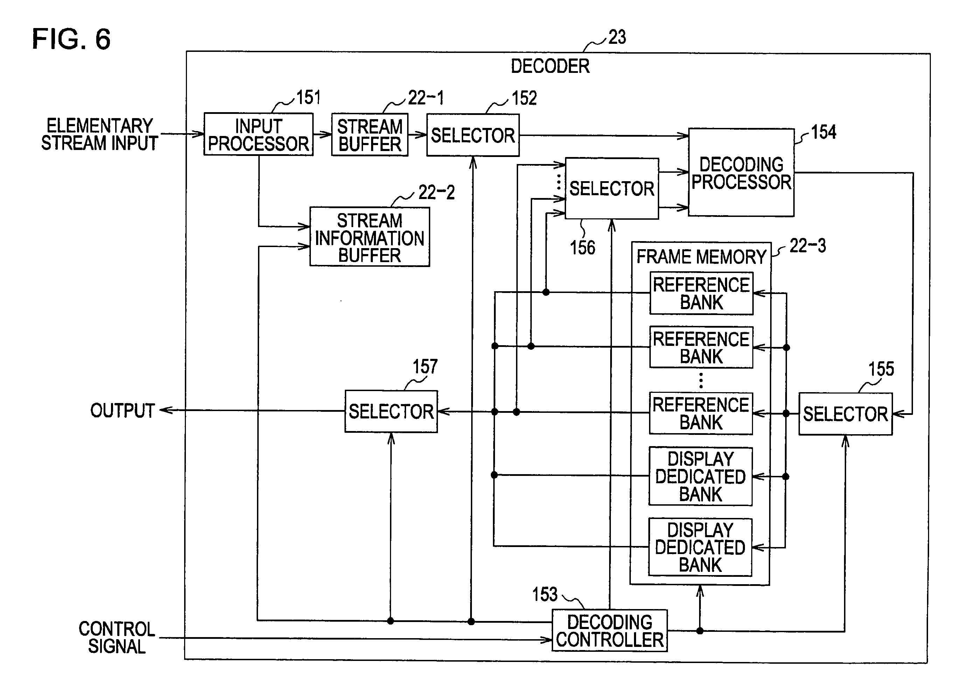

Under the control of the CPU 20, the decoder 23 can preferentially decode I and P pictures, and can realize clip playback in which a plurality of clips are collected and played back as continuous video by controlling a selector in the decoder 23. A detailed configuration and operation of the decoder 23 are described with reference to Figs. 6 to 14.

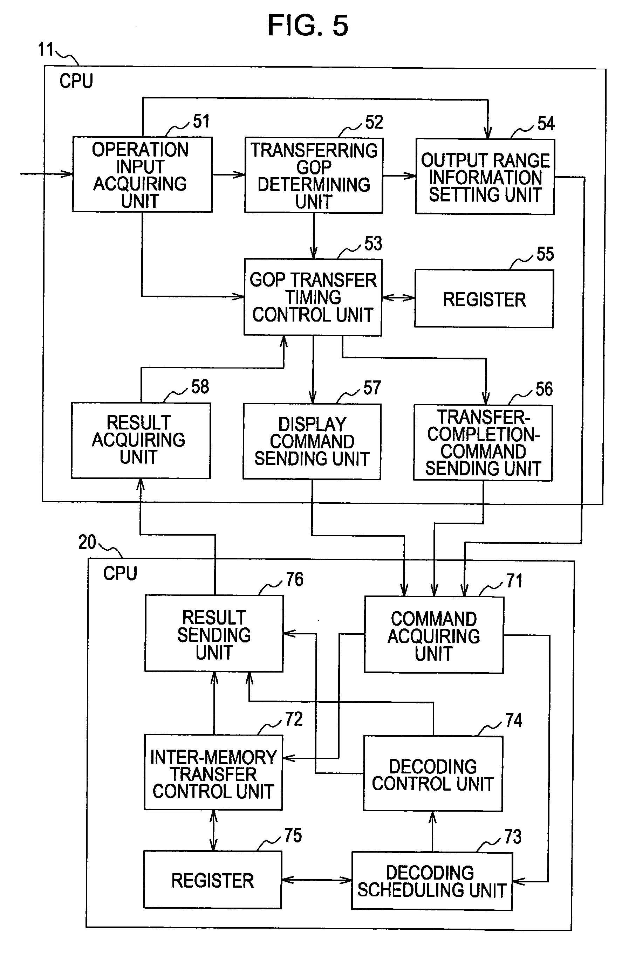

Next, the functions of the CPUs 11 and 20 are described below with reference to the functional block diagram of Fig. 5.

The CPU 11 has functions including an operation input acquiring unit 51, a transferring GOP determining unit 52, a GOP transfer timing control unit 53, an output range information setting unit 54, a register 55, a transfer-completion-command sending unit 56, a display command sending unit 57, and a result acquiring unit 58.

The operation input acquiring unit 51 acquires a user's operation input supplied from the operation input unit (not shown) through the south bridge 15 and the north bridge 12. The operation input acquiring unit 51 supplies corresponding operation input information to the transferring GOP determining unit 52, the GOP transfer timing control unit 53, or the output range information setting unit 54, if necessary.

On the basis of the operation input information supplied from the operation input acquiring unit 51, the transferring GOP determining unit 52 finds frames to be played back for output in a clip including a plurality of streams, finds frames necessary for decoding the above frames, and performs scheduling by predicting an order of displaying frames. In addition, the transferring GOP determining unit 52 determines a GOP to be transferred to the memory 18, reports the determination to the GOP transfer timing control unit 53 and the output range information setting unit 54, and controls reading and transfer of the GOP to be transferred from the stream stored in the HDD 16.

As described above, frame data transfer is performed basically in units of GOPs. However, in a clip stream including a plurality of clips obtained by segmenting a plurality of streams at arbitrary positions, each of GOPs at the start and end of each clip may not include all the contents of one GOP in a stream used as an editing material. In addition, as described with reference to Fig. 4, in order to decode frames included in GOPs at the start and end of each clip, frames that are not displayed need to be supplied to the decoder 23. For example, when a GOP at the start or end of each clip does not include all the contents of one GOP in the stream used for an editing material, all the contents of one GOP in the stream used for the editing material may be transferred, and only necessary portions may be transferred. In addition, for example, when a GOP at the start of a clip includes two B pictures at the start of an MPEG Long GOP in a stream for an editing material, in order to decode these B pictures, a previous GOP which is adjacent to the GOP and which is not included in the clip needs to be supplied to the decoder 23. In this case, the transferring GOP determining unit 52 determines a GOP to be transferred to the memory 18 so that even a GOP that is not included in the clip can be supplied to the decoder 23.

In addition, as described above, frame data transfer is performed basically in units of GOPs. When frames to be initially displayed in scrub playback, or frames at the start of a clip, are B0 and B1 at the start of a GOP, as described with reference to Fig. 4, exceptional processing is necessary in order to refer to frames in a previous GOP.

In particular, when playback frames discontinue due to high speed playback or the like, for a frame that is initially displayed in scrub playback, or a GOP(n) including a frame at the start of a clip, it is necessary to perform transfer for two GOPs obtained by adding a previous GOP(n-1). However, in scrub playback, since high speed movement of a playback position frequently occurs, it is highly possible that the next frame to be displayed be included in a GOP different from GOP(n). In this case, transfer of all the data of GOP(n) increases transferred data that is unnecessary.

Accordingly, when frames to be displayed are B0 and B1 at the start of a GOP, the transferring GOP determining unit 52 controls data transfer as exceptional processing so that data is transferred to GOP(n-1) adjacent to GOP(n) (including a frame to be displayed) in a form in which I2, B0, and B1 of GOP(n) are added to the data. After that, when display of a frame included in GOP(n) is commanded in response to a command such as commanding of normal playback, if GOP(n) is transferred as usual, transferred data only includes redundancies of I2, B0, and B1, and control does not become complicated. This reduces a loss in data transfer, thus increasing a data transfer efficiency.

The GOP transfer timing control unit 53 controls timing for transferring a GOP to the memory 18, if necessary, by using various control queues provided in the register 55 to manage GOPs stored in the memory 18.

In other words, as described above, although frame data transfer is performed basically in units of GOPs, when display of a frame is commanded, transfer of a GOP including the frame extremely deteriorates a response from commanding of display of the frame up to display of the frame. Accordingly, the GOP transfer timing control unit 53 transfers GOP data prior to the commanding of display by predicting a frame to be displayed. This enables I and P pictures of the transferred GOP to be decoded beforehand in the decoder 23 and stored in the memory 22.

In addition, GOPs at the start and end of each clip may not include all the contents of one GOP in a stream used as an editing material. Thus, when a GOP having a small number of frames is transferred, or a GOP which has a large number of frames and which has a small number of frames to be displayed is transferred, there is a possibility that display may not be performed unless transfer of the next GOP is accelerated. Therefore, the GOP transfer timing control unit 53 controls GOP transfer timing, considering the number of frames to be displayed which are included in the transferred GOP. Details of transfer timing control are described later.

The output range information setting unit 54 determines a display output range of a GOP determined by the transferring GOP determining unit 52 to be transferred, and generates output range information. After transfer of the GOP is completed, before a transfer-completion command is supplied, the output range information setting unit 54 controls supply of an output-range-specifying command to the command buffer 31.

In other words, as described above, although frame data transfer is performed basically in units of GOPs, GOPs at the start and end of each clip may not include all the contents of one GOP in a stream used as an editing material. In addition, when a GOP including a frame to be referred to for decoding frames included in the clip is transferred, there is a possibility that all frames of the GOP may not be displayed for output. The output range information setting unit 54 determines a display output range of the GOP determined by the transferring GOP determining unit 52 to be transferred, generates an output-range-specifying command as output range information, and transmits the output-range-specifying command to the command buffer 31 together with a transfer-completion command.

The register 55 stores various queues used for the GOP transfer timing control unit 53 to control GOP transfer timing, various parameters necessary for processing, etc.

The transfer-completion-command sending unit 56 sends the transfer-completion command to the command buffer 31 of the PCI bridge 17 through the north bridge 12 and the PCI bus 14. Details of control of timing for sending the transfer-completion command are described later.

The display command sending unit 57 sends a display command to the command buffer 31 of the PCI bridge 17 through the north bridge 12 and the PCI bus 14. Details of control of timing for sending the display command are described later.

The result acquiring unit 58 acquires a result responsive to a command from the result buffer 32 of the PCI bridge 17 through the north bridge 12 and the PCI bus 14.

The CPU 20 has functions including a command acquiring unit 71, an inter-memory transfer control unit 72, a decoding scheduling unit 73, a decoding control unit 74, a register 75, and a result sending unit 76.

The command acquiring unit 71 acquires, through the control bus 19, a command stored in the command buffer 31 of the PCI bridge 17 after being sent from the output range information setting unit 54, the transfer-completion-command sending unit 56, or the display command sending unit 57.

The transferring GOP determining unit 52 controls transfer, to the memory 22, of GOPs transferred to the memory 18 on the basis of the transfer-completion command and display command acquired by the command acquiring unit 71.

The decoding scheduling unit 73 determines a decoding schedule for decoding frames included in each GOP whose transfer to the memory 22 is controlled by the inter-memory transfer control unit 72 on the basis of the output-range-specifying command, transfer-completion command, and display command acquired by the command acquiring unit 71. By using a time in which decoding necessary for display is not performed, the decoding scheduling unit 73 schedules decoding so that, among the frames stored in the memory 22, I and P pictures are preferentially decoded. Either all the I and P pictures or at least some of them may preferentially be decoded. In addition, by using the I and P pictures stored in the memory 22 after being decoded beforehand, the decoding scheduling unit 73 schedules decoding so that baseband image data of a frame whose display is commanded can rapidly be output.

The decoding control unit 74 controls decoding of the decoder 23 on the basis of the decoding schedule obtained by the decoding scheduling unit 73.

The register 75 stores various control queues used for the inter-memory transfer control unit 72 to manage GOPs supplied to each memory and each decoder, and various parameters necessary for processing.

The result sending unit 76 sends results responsive to the transfer-completion command and display command acquired by the command acquiring unit 71 to the result buffer 32 of the PCI bridge 17 through the control bus 19.

In the playback apparatus 1, instead of assigning a plurality of clips to a plurality of decoders, by supplying the decoder 23 with frames included in the clips and frames necessary for decoding the included clips, and decoding I and P pictures beforehand, a single decoder can realize clip playback. Furthermore, the playback apparatus 1 can perform clip-stream variable-speed playback, scrub playback, and transient playback in which forward playback and backward playback are consecutively commanded in a short interval.

Compared with a case of the related art in which a plurality of decoders are used, the above-described configuration of the playback apparatus 1 makes it possible to eliminate the need to provide selectors in input and output stages of decoder, and also simplifies control.

As described above, in the playback apparatus 1, among I and P pictures of GOP data that are transferred beforehand, at least some pictures are decoded and stored in a time in which decoding for display is not performed, whereby, in response to a display command, if baseband image data obtained by decoding is already stored, the baseband image data can be output, and, if frames to be displayed are not stored, a frame to be displayed by using the baseband image data as a reference image, if necessary, can be decoded and output.

Fig. 6 is a block diagram showing a further detailed configuration of the decoder 23.

An input processor 151 stores the compression-coded stream data supplied from the PCI bridge 17 in a stream buffer 22-1. The input processor 151 also acquires a leading address, a data size, picture header information, a Q-matrix, etc., from the supplied stream data, and supplies these to a stream information buffer 22-2.

The stream buffer 22-1 is a predetermined storage area included in the memory 22 shown in Fig. 2 that is formed by, for example an SDRAM. The stream buffer 22-1 buffers the stream data supplied from the input processor 151 and supplies the buffered data to a selector 152. The stream buffer 22-1 can store at least stream data items in GOPs whose number is equal to the number of GOPs of I and P pictures (also called "anchor frames") capable of being stored in a frame memory 22-3, which is described later. In addition, it is preferable for the stream buffer 22-1 to store GOPs whose number is not less than the number of GOPs of anchor frames capable of being stored in the frame memory 22-3 since, in cases such as when a playback direction is reversed, and a playback start position is altered, the playback apparatus 1 is likely to cope with the cases without supplying new GOPs to the stream buffer 22-1.

The stream buffer 22-1 is a predetermined storage area included in the memory 22 shown in Fig. 2, and stores information, such as a leading address, data size, picture header information, and Q-matrix supplied in units of pictures from the input processor 151, by picture.

A decoding controller 153 controls the functional blocks of the decoder 23 by reading the address and stream information of each picture stored in the stream buffer 22-1 from the stream information buffer 22-2 on a control signal supplied from the CPU 20.

Specifically, the decoding controller 153 is controlled by the CPU 20 on the basis of a decoding schedule set on the basis of the output-range-specifying command. By controlling the selector 152, the decoding controller 153 controls timing for decoding each picture that is supplied to a decoding processor 154. In addition, the decoding controller 153 controls a selector 155 to control a storage position in the frame memory 22-3 of a baseband image signal obtained by decoding in the decoding processor 154. By controlling a selector 156, the decoding controller 153 controls supply of a baseband image signal supplied as a reference image from the frame memory 22-3 to the decoding processor 154. That is, the decoding controller 153 controls supply of a reference image for use in P or B picture decoding executed in the decoding processor 154. The decoding controller 153 is controlled in accordance with a decoded image data output schedule set on the basis of the output-range-specifying command from the CPU 20, whereby, by controlling the baseband image signal output after being read from the frame memory 22-3 by the selector 157, the decoding controller 153 controls output of the baseband image signal (obtained by decoding) that is output for display or the like, that is, the decoding controller 153 controls played-back image display timing.

Under the control of the decoding controller 153, the selector 152 supplies the stream data stored in the stream buffer 22-1 to the decoding processor 154 in units of pictures.

The decoding processor 154 decodes an MPEG video stream supplied from the selector 152 by referring to the reference image supplied from the selector 152, if necessary, and supplies the selector 155 with a baseband (uncompressed) image signal obtained by decoding.

Under the control of the decoding controller 153, the selector 155 determines a recording position in the frame memory 22-3 of the baseband image signal supplied after being obtained by decoding in the decoding processor 154. That is, the selector 155 determines a bank position at which the baseband image signal is stored, and stores the supplied baseband image signal at the determined bank position in the frame memory 22-3. In other words, the decoding controller 153 determines a bank position in the frame memory 22-3 of the baseband image signal obtained by decoding in the decoding processor 154, and controls the selector 155 so that the baseband image signal is recorded at the determined bank position.

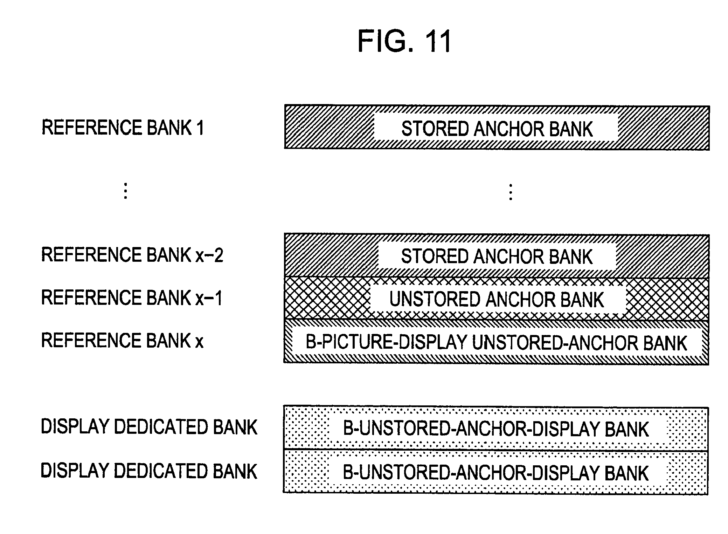

The frame memory 22-3 is a predetermined storage area included in the memory 22 shown in Fig. 2. The frame memory 22-3 includes reference banks for storing I and P pictures for use as reference images for other pictures, and a display dedicated bank provided for displaying B pictures, etc. The reference banks include a reference bank for anchor frames that are stored after being decoded beforehand, and a different reference bank for anchor frames that are decoded depending on playback output timing. An example of a bank configuration in the frame memory 22-3 is described later with reference to Fig. 11.

Under the control of the decoding controller 153, from the memory 22-3, the selector 156 reads frame image data stored in a bank specified as a reference image bank of forward P pictures, and frame image data stored at a bank specified as a reference image bank of forward and backward B pictures. The selector 156 supplies the read frame image data to the decoding processor 154.

Under the control of the decoding controller 153, the selector 157 specifies and reads an output image from the frame image data stored in the frame memory 22-3. That is, by specifying a bank for a frame to be displayed, the selector 157 reads and outputs the frame.

Next, an operation of the decoder 23 is described. As an example of the operation, the case of decoding an MPEG Long GOP in which the number of frames is 15 and the number of anchor frames is 3 is described below.

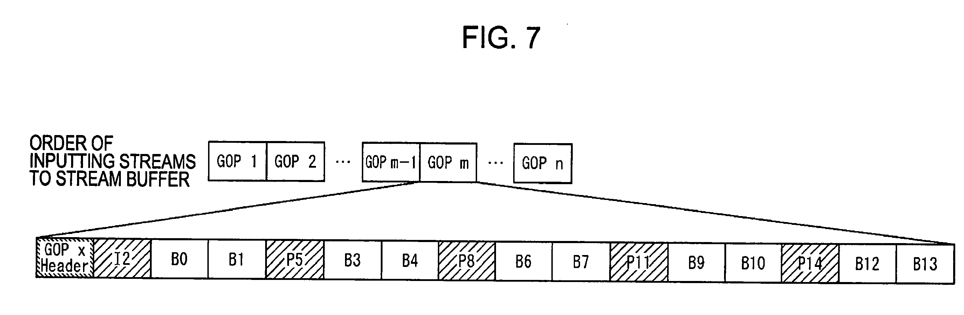

As shown in Fig. 7, each of GOPs supplied to the input processor 151 includes GOP header information other than picture data including I, P, and B pictures. GOP header information can be given to each GOP included in the stream data stored in the HDD 16. Alternatively, after GOP header information is generated by the CPU 20, the GOP header information can be given to each GOP included in the stream data supplied to the decoder 23 after being read from the HDD 16.

Header information of a GOP includes, for example, a GOP ID, the number of frames included in the GOP, and the number of anchor frames included in the GOP.

The input processor 151 supplies the stream buffer 22-1 with picture data, and supplies the stream information buffer 22-2 with information such as GOP header information, a leading address in a picture unit, a data size, picture header information, and a Q-matrix.

The stream information buffer 22-2 stores the information such as the GOP header information, the leading address in a picture unit, the data size, the picture header information, and the Q-matrix.

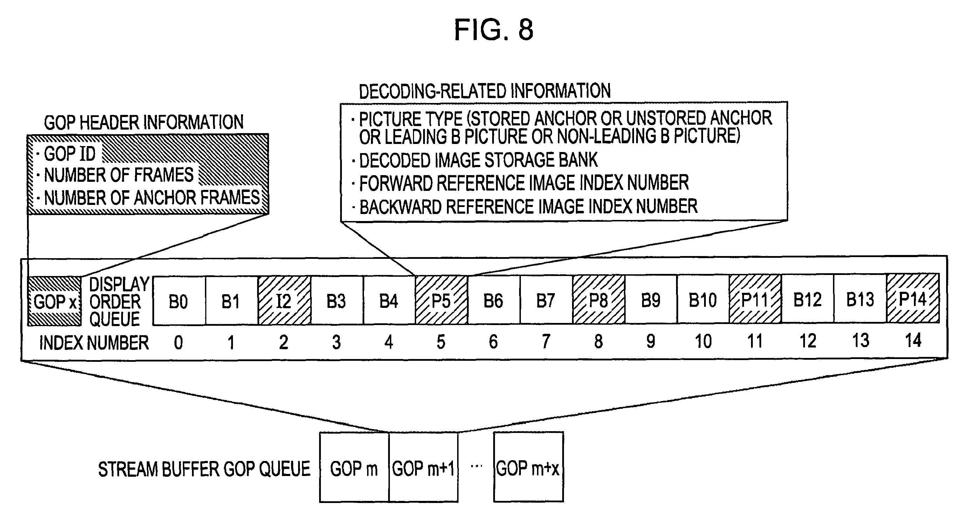

On the basis of the information (such as the GOP header information, the leading address in a picture unit, the data size, the picture header information, and the Q-matrix) stored in the stream information buffer 22-2, the decoding controller 153 generates decoding-related information of each picture of a GOP to be decoded, and manages the stream buffer GOP queue shown in Fig. 8 that includes the GOP header information and pieces of decoding-related information in a display order obtained by re-ordering.

The decoding-related information is necessary for decoding when output of a picture is requested. The decoding-related information includes necessary items among, for example, type information indicating which picture type the picture has among a stored anchor frame, an unstored anchor frame, a B picture at the start of a GOP, and a B picture at a position different from the start of a GOP, a decoded image storage bank that is information representing a storage location of a baseband image obtained by decoding, a forward-reference-image index number representing a forward reference image among reference images necessary for decoding the picture, and a backward-reference-image index number representing a backward reference image among reference images necessary for decoding the picture.

In the stream buffer GOP queue, decoding-related information for one GOP can be managed as one data unit. The stream buffer GOP queue has a FIFO (first-in first-out) arrangement or is configured so that information of a GOP that is the farthest from a GOP being currently played back can be popped.

Although the decoder 23 may decode all anchor frames beforehand prior to B picture decoding, the following description is based on the assumption that the decoder 23 decodes beforehand anchor frames selected at intervals of several frames.

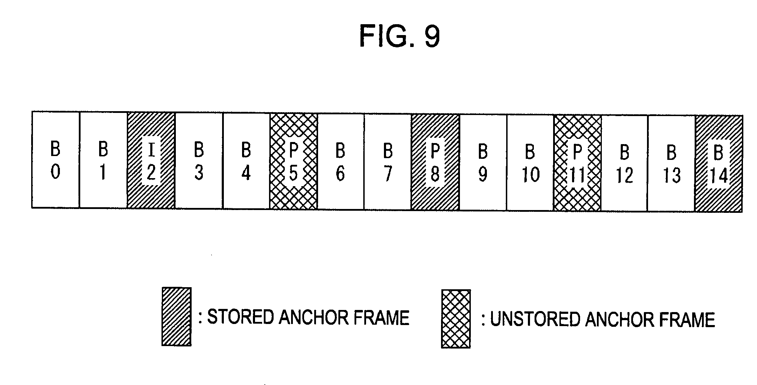

Specifically, as shown in Fig. 9, for example, the decoder 23 may also decode beforehand anchor frames in a GOP at intervals of two frames frame from an I picture. Anchor frames that are decoded beforehand and stored in a bank are hereinafter referred to as "stored anchor frames". Anchor frames that are not decoded beforehand, that is, anchor frames that are not stored in a bank, are hereinafter referred to as "unstored anchor frames".

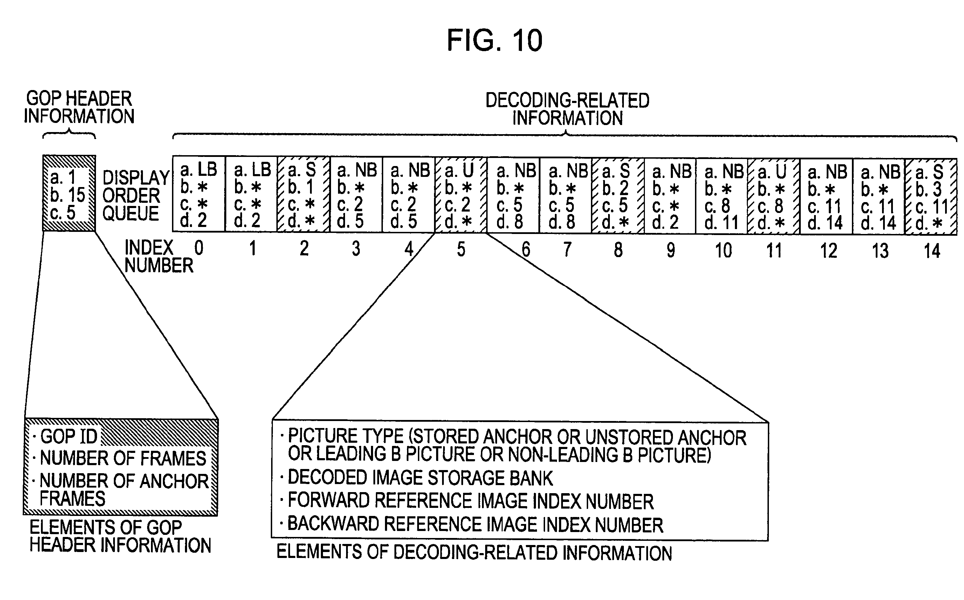

Specifically, in a case in which, for example, a GOP in which the number of frames is 15, the number of anchor frames is 3, and GOP ID is 1 is input, and GOP stored anchor information of GOP ID 1 indicates that a leading band used by a stored anchor frame of the GOP is "1", as shown in Fig. 10, information is stored in a stream buffer GOP queue.

In Fig. 10, "LB" represents a leading B picture, "S" represents a stored frame, "NB" represents a non-leading B picture, and "U" represents an unstored frame.

In other words, the GOP header information of the GOP contains "1" as a GOP ID, "15" as the number of frames, and "5" as the number of anchor frames. The decoding-related information contains picture types of pictures re-ordered on the basis of a picture display order, decoded image storage banks, forward-reference-image index numbers, and backward-reference-image index numbers. In this case, instead of using classification into I, B, and P pictures, each picture type is represented by a classification based on which frame the picture is between a stored anchor frame and an unstored anchor frame, a (leading B picture) classification based on which one the picture is between two B pictures at the start of the GOP, or a (non-leading B picture) classification based on which one the picture is among B pictures other than B pictures at the start of the GOP. An I picture with index 2, a P picture with index 8, and a P picture with index 14 are classified as stored anchor frames. A P picture with index 5 and a P picture with index 11 are classified as unstored anchor frames.

Decoded image storage banks are reserved beforehand only for the stored anchor frames and are numbered with bank numbers. For the unstored anchor frames and the B pictures, decoded image storage banks have not been reserved yet at the time the decoding-related information is generated. Thus, the bank numbers of the decoded image storage banks are undefined. In addition, leading B pictures (B pictures for which an I or P picture in a forward GOP is used as a reference image) whose index numbers are 0 and 1 are not set since there is a possibility that the stream includes no previous GOP at an initial setting time. The leading B pictures are set when a last I or P picture in the forward GOP is obtained after being searched for in decoding. After that, forward reference image index numbers and backward reference image index numbers for the other B pictures, and forward reference image index numbers for the other P pictures are set.

On the basis of the decoding-related information managed in the stream buffer GOP queue, the decoding controller 153 controls decoding timing for each frame in the supplied stream data.

In other words, as in the case described with reference to Fig. 9, instead of setting all the anchor frames as stored anchor frames, the decoding controller 153 sets, as stored anchor frames, only anchor frames selected at intervals of two frames from an I picture or anchor frames selected at intervals of several frames. The decoding controller 153 controls the selector 152 so that the decoding processor 154 decodes the set anchor frames beforehand in a time in which decoding is not performed before B-picture decoding is performed.

As described above, the decoding processor 154 can decode one frame in a time (for example, approximately 1/3 to 1/4 of the time of displaying one frame) sufficiently shorter than the time for displaying one frame. Therefore, the decoding controller 153 controls the selectors 152, 155, and 156 so that, after stored anchor frames capable of being stored in the frame memory 22-3 are decoded beforehand in units of GOPs, the decoded frames are supplied and stored in predetermined banks of the frame memory 22-3.

Fig. 11 shows a bank configuration in a case in which a temporary storage area for storing baseband image data for X frames and a temporary storage area for storing display image data for two frames can be reserved as the frame memory 22-3, with the anchor frames selected every other frame set as stored anchor frames, that is, a case in which bank memories for (X+2) banks can be reserved.

Among banks for (X+2) frames in the frame memory 22-3, two banks are used as display dedicated banks for B pictures or unstored anchor frames. The other banks, that is, banks for X frames, are used for reference images. Among the reference image banks for X frames, one is used as an unstored anchor bank for storing a baseband image of an unstored anchor frame used as a reference image when a stored anchor frame is decoded beforehand. Another one is used as a B-picture unstored anchor bank for storing a baseband image of an unstored anchor frame sued as a reference image when a B picture to be displayed is decoded. The other banks for (X-2) frames are used as stored anchor banks for storing decoded stored anchor frames.

Specifically, when an I picture, which is a stored anchor frame, is decoded, the I picture is decoded alone and stored in the stored anchor bank. In addition, when a P picture, which is a stored anchor frame, is decoded, an unstored anchor frame previously adjacent to the stored anchor frame is decoded by referring to a baseband image of a stored anchor frame which is stored in the stored anchor bank and which is further previously adjacent thereto, and the decoded unstored anchor frame is stored in the unstored anchor bank. Thus, the P picture as the stored anchor frame is decoded by referring to the stored unstored anchor frame, and the decoded P picture is stored in the stored anchor bank.

When one frame among frames in a GOP in which an anchor frame is stored beforehand in the stored anchor bank is commanded to be displayed, if the frame commanded to be displayed is a stored anchor frame, a baseband image of the stored anchor frame stored in the stored anchor bank is read and displayed. If the frame commanded to be displayed is an unstored stored anchor frame, a baseband image of the stored anchor frame stored in the stored anchor bank is used as a reference image, and the unstored anchor frame is decoded and stored in the display dedicated bank for display. If the frame commanded to be displayed is a B picture, a unstored anchor frame is decoded by referring to a baseband image of the stored anchor frame which is stored in the stored anchor bank and whose previous anchor frame adjacent to the unstored anchor frame, and the decoded frame is stored in a B-picture-display unstored anchor bank. By referring to the stored decoded frame and the baseband image of the stored anchor frame stored in the stored anchor bank, the B picture to be displayed is decoded and stored in the display dedicated bank for display.

In other words, a stored anchor frame included in a GOP and a unstored anchor frame that is necessary as a reference image for decoding the stored anchor frame are decoded beforehand and are stored in the frame memory 22-3. Among the unstored anchor frames, an unstored anchor frame that is not necessary as a reference image for decoding a stored anchor frame (for example, when a temporally last anchor frame in a GOP is an unstored anchor frame) may not be decoded until the unstored anchor frame is commanded to be displayed.

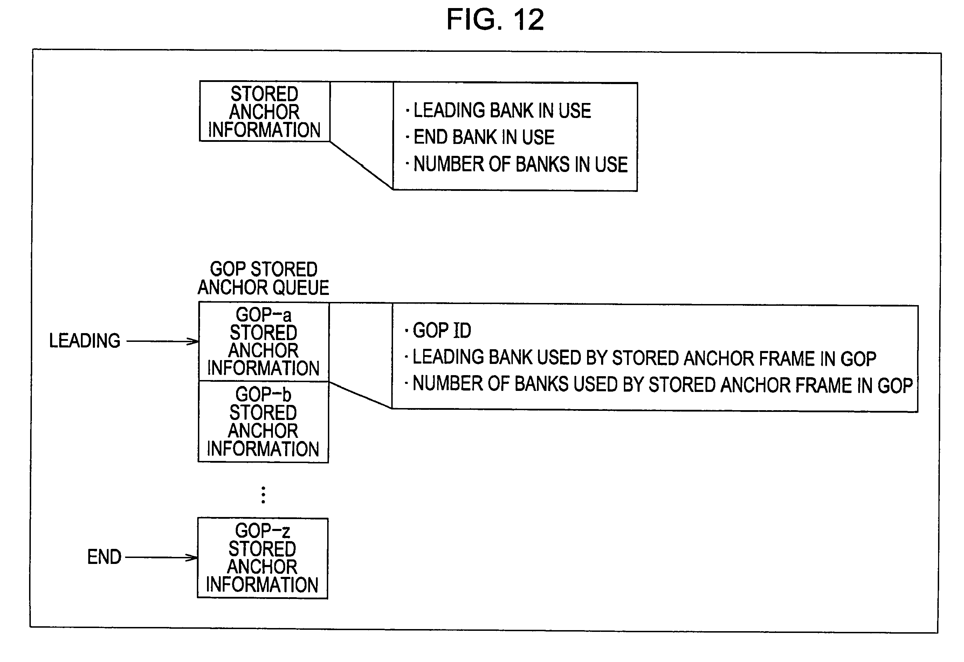

Management of the frame memory 22-3 by the decoding controller 153 is described below with reference to Fig. 12.

As shown in Fig. 12, the decoding controller 153 controls stored-anchor-frame decoding timing by using stored anchor information and pieces of GOP-stored anchor information for a plurality of frames which are stored in a GOP stored anchor queue. The stored anchor information is necessary for creating the GOP stored anchor queue, and includes information of leading and end banks in use and the number of banks in use. The GOP stored anchor queue is a bidirectional queue in which data can be pushed at each of the start and end of the queue. The GOP stored anchor queue stores, for each GOP, GOP stored anchor information that is related to stored anchor frames stored between leading and end banks in use. In the GOP stored anchor queue, GOP-stored anchor information (described in the stored anchor information) that is information of stored anchor frames stored between the leading and end banks in use is stored for each GOP. The GOP-stored anchor information is necessary for determining a bank storage destination for a baseband image of the stored anchor frame of each GOP. GOP-stored anchor information includes a GOP ID of a corresponding GOP, a leading bank used in the stored anchor frame of the GOP, and the number of banks used by the stored anchor frame of the GOP.

The decoding controller 153 controls the selector 156 by performing decoding-order scheduling so that a stored anchor frame is preferentially decoded by using a time in which decoding of a unstored anchor frame or B picture to be displayed is not performed, whereby the stored anchor frame is supplied and decoded in the decoding processor 154, the decoding controller 153 determines in which of reference banks (in the frame memory 22-3) baseband image data of the decoded stored anchor frame is to be stored, while referring to the stored anchor information and the pieces of GOP-stored anchor information for a plurality of frames which are stored in the GOP stored anchor queue. The decoding controller 153 also controls the selector 155 to stored the baseband image data of the decoded stored anchor frame at a predetermined position of the reference bank in the frame memory 22-3.

When the stored anchor frame to be decoded beforehand is an I picture, the selector 152 is controlled to supply the I picture to the decoding processor 154 and the I picture is decoded. After that, the selector 155 is controlled to supply the decoded picture to one of the stored anchor banks among the reference banks in the frame memory 22-3.

In addition, when the stored anchor frame to be decoded beforehand is a P picture, first, a last unstored anchor frame adjacent to the P picture is supplied and decoded in the decoding processor 154, the selector 155 is subsequently controlled to store the decoded picture in the unstored anchor bank among the reference banks in the frame memory 22-3. The selector 152 is controlled to supply a P picture, which is a stored anchor frame, to the decoding processor 154, and the selector 156 is controlled to execute P-picture decoding by referring to the baseband image data stored in the unstored anchor bank. In addition, the selector 155 is controlled to store the decoded picture in one of the stored anchor banks among the reference banks in the frame memory 22-3.

The decoding controller 153 uses an anchor frame decoding queue to manage a schedule for decoding unstored anchor frames that are necessary as reference images for decoding stored anchor frames to be decoded beforehand and stored anchor frames among the anchor frames included in the GOP, and bank positions of the reference banks after decoding is performed. Specifically, the decoding controller 153 determines whether each of pictures in the GOP from its start is an unstored anchor frame that is necessary as a reference image for decoding a stored anchor frame or unstored anchor frame. The decoding controller 153 sets a bank position in each picture to be decoded at which baseband image data obtained by decoding is stored, and pushes the bank position in the anchor frame decoding queue.

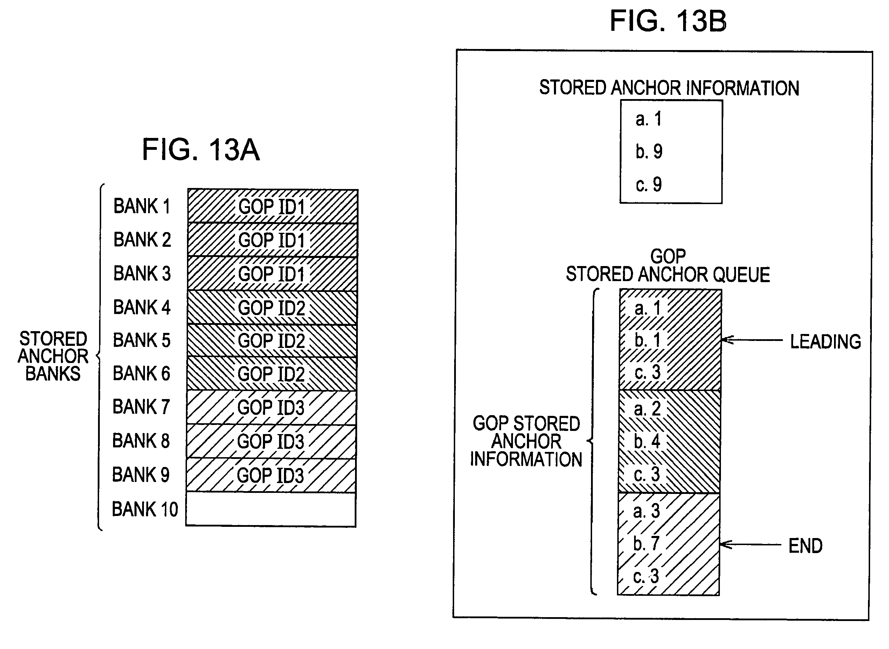

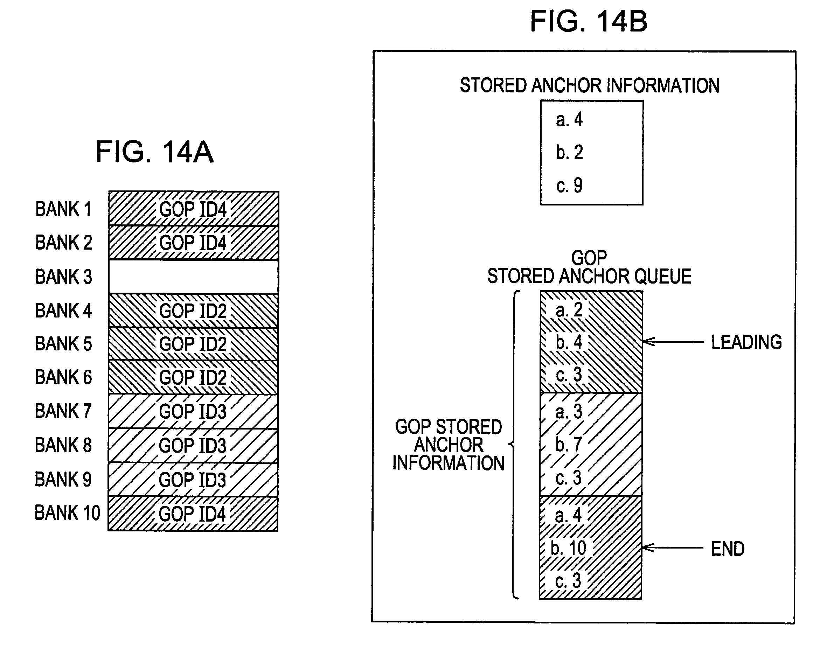

An example of specific processing of stored anchor bank management is described below with reference to Figs. 13A and 13B, and 14A and 14B. A case in which ten banks can be used as stored anchor banks, that is, baseband image data for 14 frames can be stored in the frame memory 22-3, is described below.

In the state shown in Fig. 13A, baseband images of already decoded stored anchor frames having GOP ID1, GOP ID2, and GOP ID3 are stored in banks 0 to 3, banks 4 to 6, and banks 7 to 9 among the ten stored anchor banks in the frame memory 22-3. At this time, the stored anchor information and GOP stored anchor queue managed by the decoding controller 153 enter the state shown in Fig. 13B. Specifically, management based on the stored anchor information indicates that a leading bank in use is bank 1, an end bank in use is bank 9, and the number of banks in use is 9. Management based on the GOP stored anchor queue indicates that stored anchor banks having GOP ID1 use three banks, that is, banks 1 to 3, that stored anchor banks having GOP ID2 use three banks, that is, banks 4 to 6, and that stored anchor banks having GOP ID3 use three banks, that is, banks 7 to 9.

Next, when stream data having GOP ID4 in which the number of anchor frames is 5 is supplied, it is difficult for all the stored anchor frames having GOP ID4 to be stored since the number of stored anchor frames of the GOP having GOP ID4 is 3 and only bank 10 is free. Thus, it becomes necessary to delete some of the stored anchor frames of one currently stored GOP.

The decoding controller 153 pops, from the GOP stored anchor queue, stored anchor information of the GOP having GOP ID which is the farthest from GOP information having GOP ID4 in the information included in the GOP stored anchor queue, and pushes the stored anchor information of the GOP having GOP ID4 at the end of the GOP stored anchor queue.

A state of ten stored anchor frame banks in the frame memory 22-3 is shown in Fig. 14A, and states of the stored anchor information and the GOP stored anchor queue are shown in Fig. 14B. Specifically, similarly to the case described in Figs. 13A and 13B, in banks 4 to 6 among the ten stored anchor banks in the frame memory 22-3, stored anchor frames having GOP ID2 are stored, and, in banks 7 to 9, stored anchor frames having GOP ID3 are stored. Additionally supplied stored anchor frames having GOP ID4 are stored in banks, 10, 1, and 2. Management based on stored anchor information indicates that a leading bank in use is bank 4, an end bank in use is bank 2, and the number of banks in use is 9. Management based on the GOP stored anchor queue indicates that stored anchor banks having GOP ID2 use three banks, banks 4 to 6, that stored anchor banks having GOP ID3 use three banks, that is, banks 7 to 9, and that stored anchor banks having GOP ID4 use three banks, that is, bank 10 and two following banks.

In the above-described manner, decoding by the decoder 23 is controlled. When a GOP at the start or end of a clip does not include all the contents of one GOP in a stream used as an editing material, as described above, all the contents of one GOP in the stream used as the editing material may be transferred to the memory 22, and only necessary of the GOP may be transferred. In addition, for example, when a GOP at the start of a clip includes two B pictures in MPEG Long GOP, it is necessary to supply the decoder 23 with a first forward GOP from the GOP which is not included in the clip.

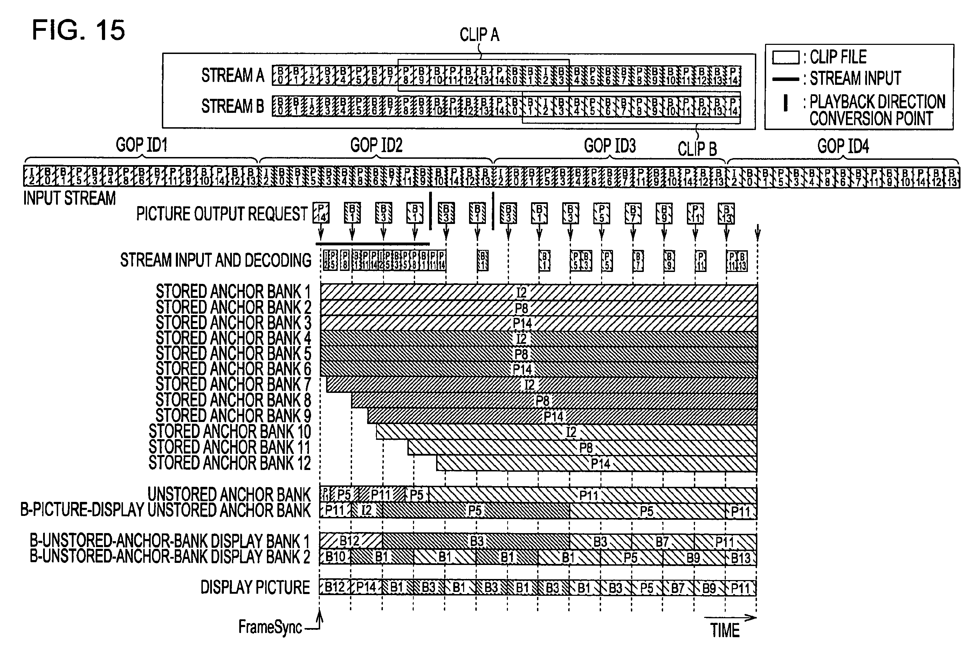

Specific examples of a GOP transfer range, a method for specifying a range to be output for display, and decoding are described below with reference to Figs. 15 to 18.

Fig. 15 illustrates a first example of GOP transfer and operation of the decoder 23 in a case in which a clip stream formed by connecting clip A, which is part of stream A, and clip B, which is part of stream B, is transient-played back (forward playback and reverse playback are consecutively commanded in a short interval) at ±2x speed.

Clip A includes portions of two GOPs. Accordingly, in order to decode a frame included in clip A, a plurality of frames which are not included in clip A and which are included in the two GOPs are necessary. Clip B includes a portion of one GOP. In order to decode a frame included in clip B, a plurality of frames which are not included in clip B and which are included in the first forward GOP from the GOP including a frame included in clip B are necessary. In other words, in order to decode the clip stream formed by connecting clip A and clip B, data of four GOPs is necessary.

In the first example, it is assumed that all GOPs necessary for decoding the clip stream be transferred. Halves of I pictures and P pictures included in the transferred GOPs are preferentially decoded.

A GOP transfer order in the case of forward playback from clip A to clip B is determined on the basis of a clip playback order and arranged positions of GOPs in a stream used as a material. Thus, on the basis of the GOP transfer order, the transferring GOP determining unit 52 sets the four GOPs to have GOP ID1 to GOP ID4, and treats the four GOPs as GOPs to be transferred to the memory 18.

GOP transfer timing is controlled such that the GOP transfer timing control unit 53 performs processing. Specifically, GOP data items of GOP ID1 to GOP ID4 are transferred with predetermined timing prior to a display command so that I and P pictures in the transferred GOPs are decoded beforehand and stored in the memory 22.

After transfer of the data items of the GOPs having GOP ID1 to GOP ID4 finishes, a transfer-completion command is transmitted to the command buffer 31 of the PCI bridge 17 with predetermined timing.

The display command sending unit 57 transmits a display command for each frame to the command buffer 31 of the PCI bridge 17 on the basis of an operation input from the user.

For example, as in the example, shown in Fig. 15, of a picture output request, after forward GOP playback from the start of clip A to B1 in GOP ID4 is commanded, when reverse GOP playback is commanded (when, in Fig. 15, next to picture B1 in GOP ID4, playback of picture B3 in GOP ID2 is commanded), at this time, the number of frames (to be displayed) up to picture P14 in GOP ID1, whose display is predicted to be commanded next to the frame included in GOP ID2, is only 5. Accordingly, if anchor frame information of GOP ID1 is erased from the stored anchor bank, there is a possibility that a display screen may freeze since decoding necessary for display until display of picture P4 in GOP ID1 becomes insufficient. Therefore, when transient playback of the clip stream is executed, it is preferable that baseband image data obtained by decoding in a stored anchor frame corresponding to GOP ID1 be not erased. Considering this case, it is preferable that the stored anchor banks in the decoder 23 be provided correspondingly to 12 frames.

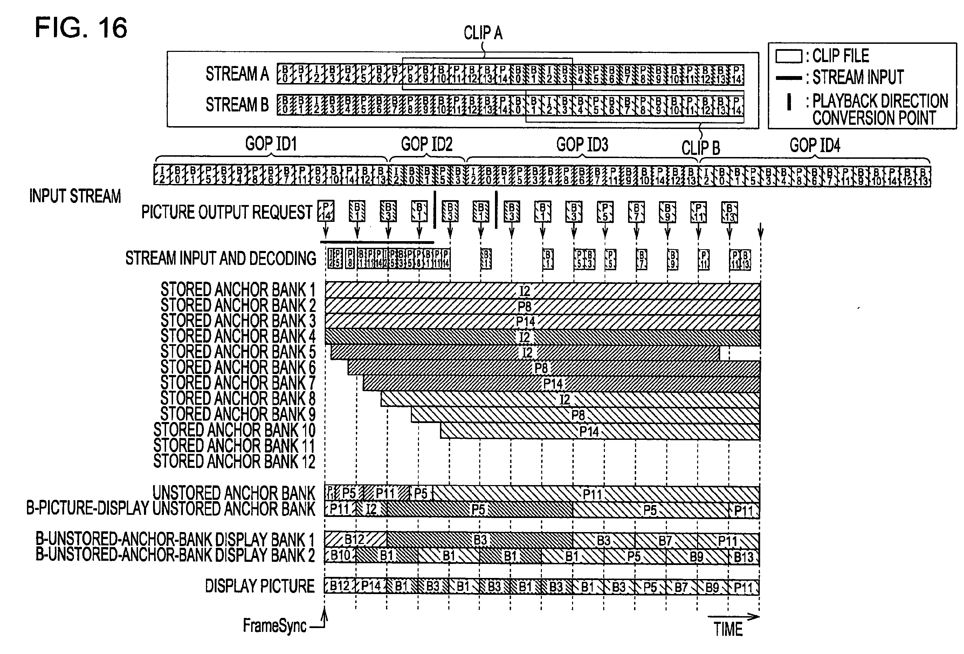

In the clip stream shown in Fig. 15, information of pictures B4 to B13 in the GOP may not be transferred since the information is not necessary at all for decoding the frame in the clip. Fig. 16 illustrates, as a second example of the GOP transfer and operation of the decoder 23, a case in which only necessary frames in the GOP ID are transferred.

In other words, the transferring GOP determining unit 52 selects only a range in the GOP at the end of one clip which includes frames included in the clip and frames necessary for decoding the included frames, and sets the range as a range to be transferred. On the basis of a clip playback order and arranged positions of four GOPs in a stream used as a material, the transferring GOP determining unit 52 sets the four GOPs to have GOP ID1 to GOP ID4, and treats the four GOPs as GOPs to be transferred to the memory 18. In other words, in the case shown in Fig. 16, GOP transfer is basically controlled such that the GOP transfer timing control unit 53 performs processing similarly to the case described with reference to Fig. 15 except that the number of frames to be transferred as GOP IDs. Specifically, GOP data items of GOP ID1 to GOP ID4 are transferred with predetermined timing prior to a display command so that I and P pictures of the transferred GOPs are decoded beforehand and stored in the memory 22.

After transfer of GOP data items of GOP ID1 to GOP ID4 finishes, a transfer-completion command is transmitted to the command buffer 31 of the PCI bridge 17 with predetermined timing.

In the case shown in Fig. 16, even if a predetermined command similar to that in the case described with reference to Fig. 15 is generated, compared with the case shown in Fig. 15, pictures P8 and 114 in GOP ID2 are not transferred, so that, even if the number of stored anchor banks is less, transient playback can be executed preventing the display screen from freezing. Here, it is preferable that the stored anchor banks in the decoder 23 be provided correspondingly to ten frames.

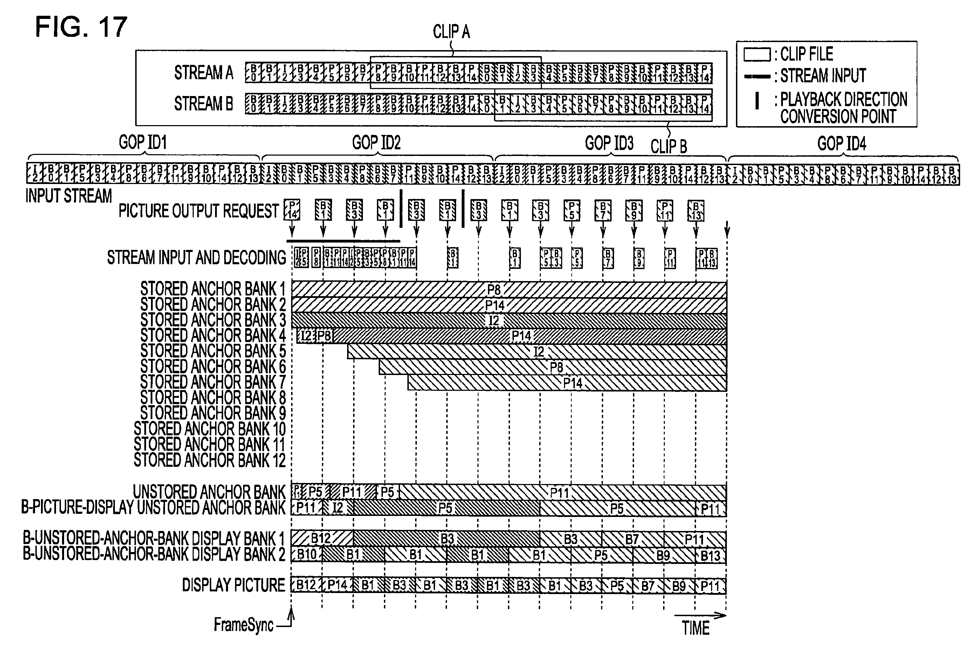

In addition, the transfer may be executed in units of GOPs, and only frames necessary for display may be decoded on the basis of the output-range-specifying command. Fig. 17 illustrates, as a third example of the GOP transfer and operation of the decoder 23, a case in which the transfer is executed in units of GOPs and in which only frames necessary for display are decoded by using the output-range-specifying command.

Similarly to the case described with reference to Fig. 15, on the basis of a clip playback order and arranged positions of four GOPs in a stream, the transferring GOP determining unit 52 sets the four GOPs to have GOP ID1 to GOP ID4, and treats all the frames included in the four GOPs as GOPs to be transferred to the memory 18.

The output range information setting unit 54 sets output ranges of GOP ID1 to GOP ID4 to be transferred. Here, the output range information setting unit 54 sets a display output range of GOP ID1 to 7-15, a display output range of GOP ID2 to 1-4, a display output range of GOP ID3 to 0-0, and a display output range of GOP ID4 to 2-15.

Similarly, GOP transfer timing is controlled such that the GOP transfer timing control unit 53 performs processing. Specifically, GOP data items of GOP ID1 to GOP ID4 are transferred with predetermined timing prior to a display command so that I and P pictures of the transferred GOPs are decoded beforehand and stored in the memory 22.

After transfer of GOP data items of GOP ID1 to GOP ID4 finishes, an output-range-specifying command and a transfer-completion command are transmitted with predetermined timing to the command buffer 31 of the PCI bridge 17.

The CPU 20 controls the decoder 23 on the basis of the output-range-specifying command. Thus, the decoder 23 decodes only picture I2 in GOP ID2, and stores the decoded picture in the stored anchor bank. In addition, the display output range 0-0 of GOP ID3 indicates that GOP ID3 is necessary only for displaying leading picture B1 in GOP ID4. Thus, finally, only picture P14 may be stored in the stored anchor bank. Therefore, in this case, it is preferable that the stored anchor banks in the decoder 23 be provided correspondingly to eight frames.

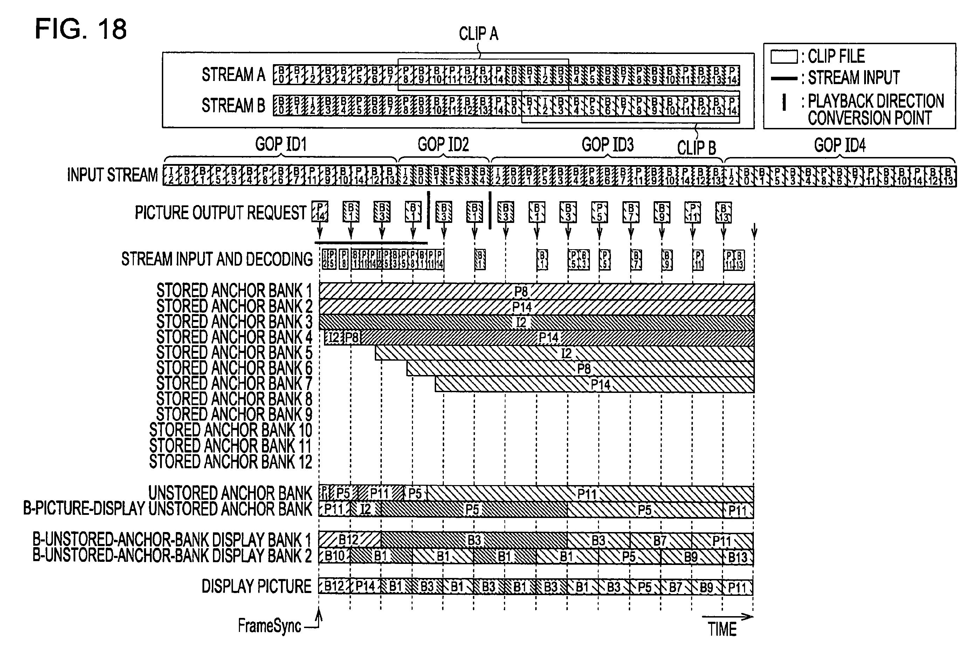

In addition, as in the cases described with reference to Figs. 16 and 17, only a necessary range may be transferred and only frames necessary for display may be decoded on an output-range-specifying command. Fig. 18 illustrates, as a fourth example of the GOP transfer and operation of the decoder 23, a case in which only a necessary portion is set as a GOP transfer unit and in which only frames necessary for display are decoded by using an output-range-specifying command.

In other words, the transferring GOP determining unit 52 selects, in a GOP at the end of the clip, only frames necessary for decoding frames included in the clip, and sets the frames as frames to be transferred. Also, on the basis of a clip playback order and arranged positions of four GOPs in a stream used as a material, the transferring GOP determining unit 52 sets the four GOPs to have GOP ID1 to GOP ID4, and treats the four GOPs as GOPs to be transferred to the memory 18.

The output range information setting unit 54 sets output ranges of GOP ID1 to GOP ID4 to be transferred. Also in this case, the output range information setting unit 54 sets a display output range of GOP ID1 to 7-15, a display output range of GOP ID2 to 1-4, a display output range of GOP ID3 to 0-0, and a display output range of GOP ID4 to 2-15.

GOP transfer timing is controlled such that the GOP transfer timing control unit 53 performs processing. Specifically, GOP data items of GOP ID1 to GOP ID4 are transferred with predetermined timing prior to a display command so that I and P pictures of the transferred GOPs are decoded beforehand and stored in the memory 22.

After transfer of GOP data items of GOP ID1 to GOP ID4 finishes, an output-range-specifying command and a transfer-completion command are transmitted with predetermined timing to the command buffer 31 of the PCI bridge 17. The CPU 20 controls the decoder 23 on the basis of the output-range-specifying command. Thus, the decoder 23 decodes only picture I2 in GOP ID2, and stores the decoded picture in the stored anchor bank. In addition, the display output range 0-0 of GOP ID3 indicates that GOP ID3 is necessary only for displaying leading picture B1 in GOP ID4. Thus, finally, only picture P14 may be stored in the stored anchor bank. Therefore, also in the fourth example, it is preferable that the stored anchor banks in the decoder 23 be provided correspondingly to the number of frames.

Compared with the first and third examples, in the fourth example described with reference to Fig. 18, a reduced number of frames transferred can improve a display response. In addition, by reducing anchor frames that need to be stored, if the stored anchor banks are identical in number of banks, an advantage can be obtained in that a broader scrub playback response can be obtained.

The above-described method can realize clip playback in cases such as when scrub playback is played back, and when playback is performed with a speed (such as 1x or 1.5x speed) specified.

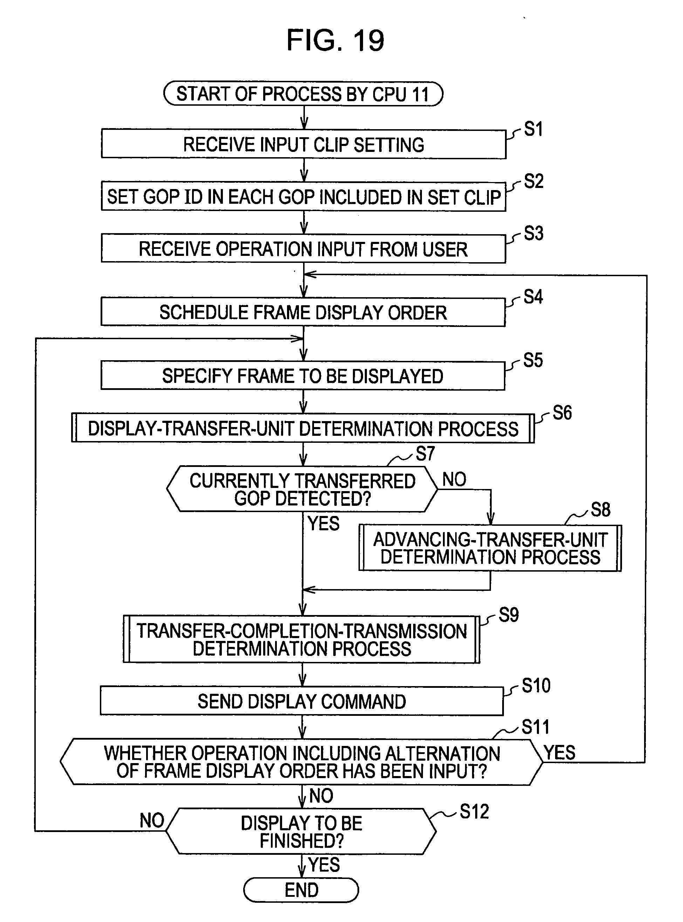

Next, a process executed by the CPU 11 is described below with reference to the flowchart shown in Fig. 19.

In step S1, the operation input acquiring unit 51 in the CPU 11 receives clip setting input from the operation input unit (not shown) through the south bridge 15 and the north bridge 12. That is, the operation input acquiring unit 51 receives input setting that indicates which portions of which coded stream are segmented as clips and how the clips are connected to generate a clip stream, and supplies the received clip setting to the transferring GOP determining unit 52, the GOP transfer timing control unit 53, and the output range information setting unit 54.

In step S2, on the basis of a GOP transfer order in forward playback of the clip stream, the transferring GOP determining unit 52 sets GOP IDs in GOPs included in set clips and GOPs necessary for decoding the included GOPs.

In step S3, the operation input acquiring unit 51 receives an operation input from the operation input unit through the south bridge 15 and the north bridge 12. The operation input represents starting of display that is executed by the user. The operation input acquiring unit 51 supplies the operation input to the transferring GOP determining unit 52 and the GOP transfer timing control unit 53.

In step S4, the transferring GOP determining unit 52 schedules the frame display order. In step S5, the transferring GOP determining unit 52 specifies a frame to be displayed, and reports the specified frame to the GOP transfer timing control unit 53 and the output range information setting unit 54.

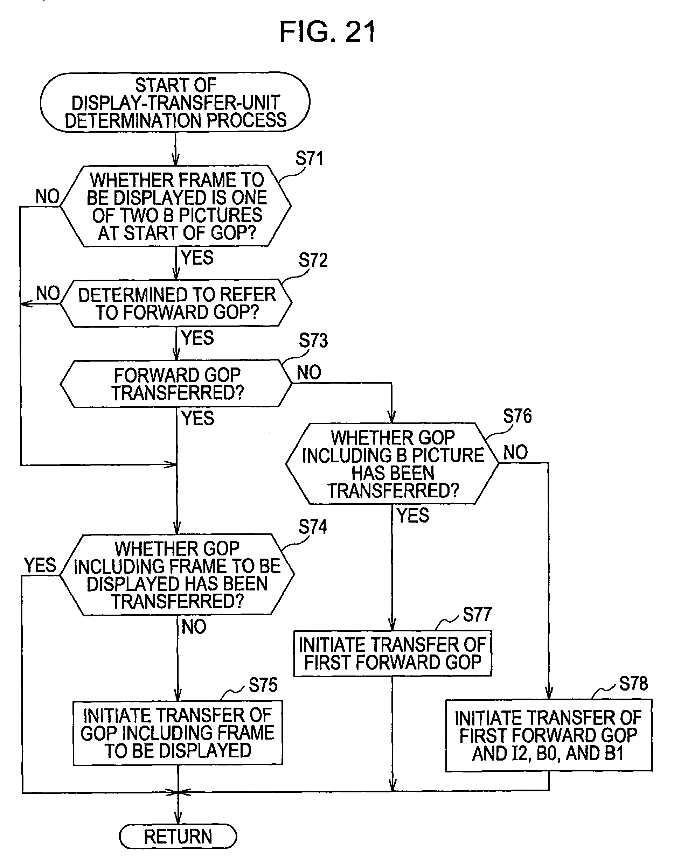

In step S6, a display-transfer-unit determination process, which is described later with reference to Fig. 21, is executed.

In step S7, the GOP transfer timing control unit 53 determines whether to detect a currently transferred GOP.

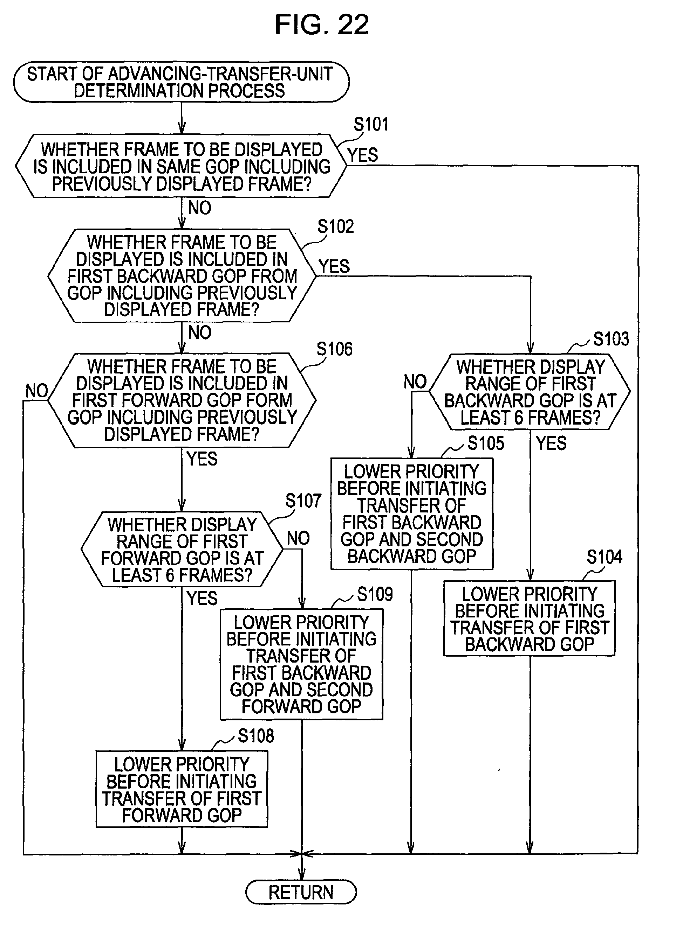

If, in step S7, it is determined that the currently transferred GOP is not detected, in step S8, an advancing-transfer-unit determination process, which is described later with reference to Fig. 22, is executed.

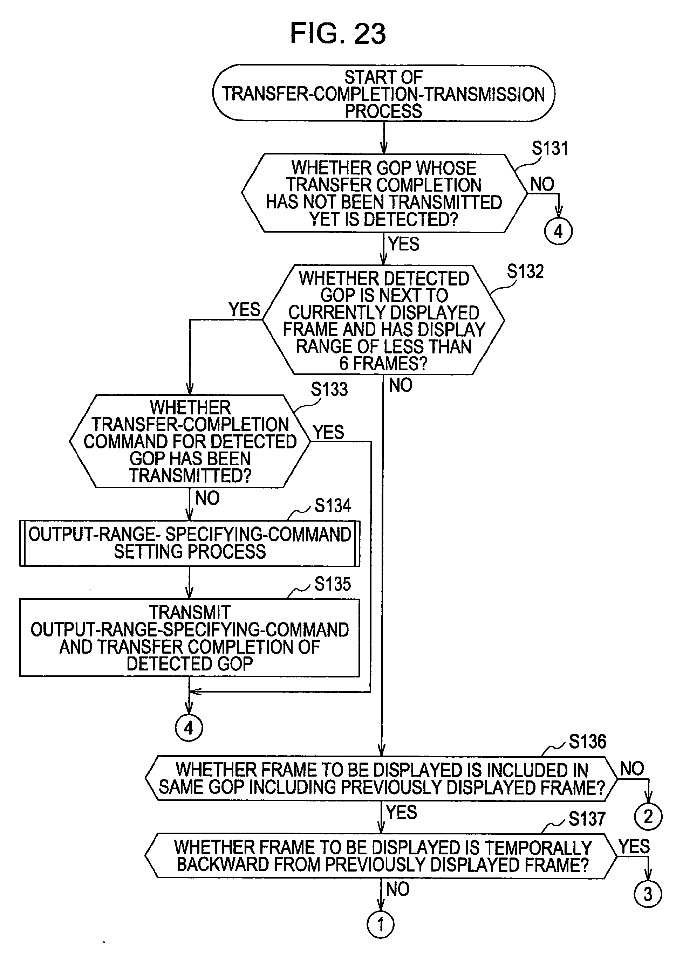

If, in step S7, it is determined that the currently transferred GOP is detected, or after step S8 finishes, in step S9, a transfer-completion-transmission determination process, which is described later with reference to Figs. 23 to 26, is executed.

In step S10, the GOP transfer timing control unit 53 commands the display command sending unit 57 to send a display command to display the frame (to be displayed) specified in step S5. The display command sending unit 57 transmits the display command to the command buffer 31 of the PCI bridge 17 through the north bridge 12 and the PCI bus 14.

In step S11, on the basis of a signal supplied from the operation input acquiring unit 51, the signal representing the operation input from the user, the transferring GOP determining unit 52 determines whether an operation input has been received, the operation input representing an operation that includes alteration of frame display order such as a change in display direction or speed, or a change of stream to be displayed. If, in step S11, it is determined that the operation input including the alteration of frame display order has been received, the process returns to step S4 and the subsequent steps are repeated.

If, in step S11, it is determined that the operation input including the alteration of frame display order has not been received, in step S12, on the basis of the operation input signal supplied from the operation input acquiring unit 51, the transferring GOP determining unit 52 determines whether to finish display. If, in step S12, the transferring GOP determining unit 52 has determined not to finish display, the process returns to step S5 and the subsequent steps are repeated. If, in step S12, the transferring GOP determining unit 52 has determined to finish display, the process finishes.

As described above, the CPU 11 determines a frame display order on the basis of an operation input from the user. A GOP transfer unit and transfer timing are determined so that, prior to transmission of a display command, I and P pictures of a corresponding GOP can be decoded. When the transfer is completed, a transfer-completion command and an output-range-specifying command are transmitted (in the transfer-completion-transmission determination process in step S9) and the display command is subsequently transmitted. Thus, when the display command is transmitted, there is a high possibility that the I and P pictures in the GOP have already been decoded, thus enhancing a display response to the display command.

The CPU 20 controls decoding by the decoder 23 on the basis of commands supplied from the CPU 11. Specifically, the CPU 20 determines timing for inputting compression-coded stream data to the memory 22, timing for exchanging data between the memory 22 and the decoder 23, decoding timing for each picture, and output of a decoded picture, that is, display timing. On the basis of the timing of the above types, the CPU 20 controls the PCI bridge 17, the memory 22, and the decoder 23.

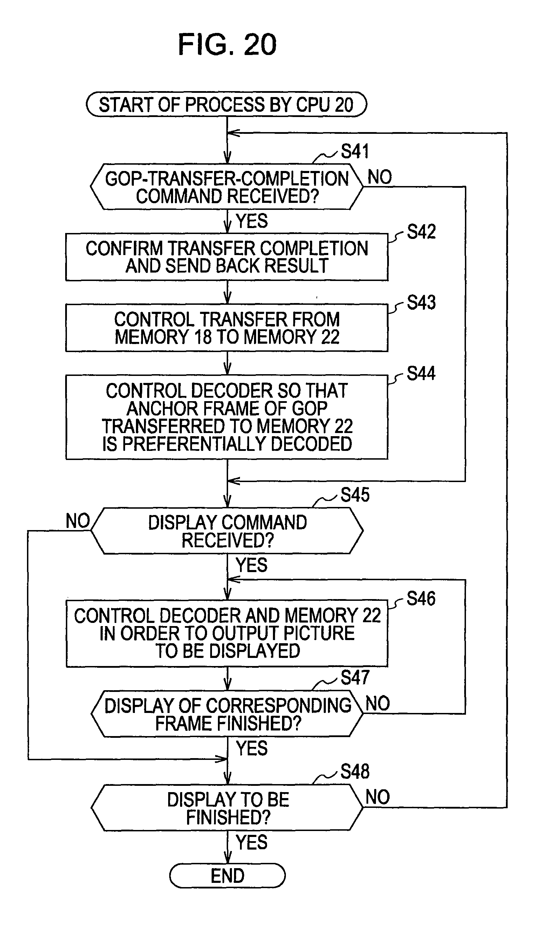

Next, a process of the CPU 20 that is executed in parallel to the process of the CPU 11 described with reference to Fig. 19 is described below with reference to the flowchart shown in Fig. 20.

In step S41, by referring to the command buffer 31 of the PCI bridge 17 through the control bus 19, the command acquiring unit 71 in the CPU 20 determines whether to have received a GOP-transfer-completion command. If, in step S41, the command acquiring unit 71 has determined not to have received the GOP-transfer-completion command, the process proceeds to step S45, which is described later.

If, in step S41, the command acquiring unit 71 has determined to have received the GOP-transfer-completion command, in step S42, the command acquiring unit 71 reports reception of the GOP-transfer-completion command to the inter-memory transfer control unit 72 and the result sending unit 76. The inter-memory transfer control unit 72 confirms completion of GOP transfer from the HDD 16 to the memory 18. The result sending unit 76 sends back a result responsive to the GOP-transfer-completion command to the result buffer 32 of the PCI bridge 17 through the control bus 19.

In step S43, the inter-memory transfer control unit 72 controls GOP transfer from the memory 18 to the memory 22. Specifically, on the basis of, instead of timing that the inter-memory transfer control unit 72 completes GOP transfer to the memory 18, timing that the GOP-transfer-completion command is received from the CPU 11, GOP transfer from the memory 18 to the memory 22 is controlled.

In step S44, the decoding scheduling unit 73 schedules decoding so that anchor frames of the GOP transferred to the memory 22 are preferentially decoded, and reports the decoding schedule to the decoding control unit 74. The decoding control unit 74 controls decoding of the decoder 23 on the basis of the decoding schedule obtained by the decoding scheduling unit 73.

If, in step S41, the command acquiring unit 71 has determined not to have received the GOP-transfer-completion command, or after step S44 finishes, in step S45, by referring to the command buffer 31 of the PCI bridge 17 through the control bus 19, the command acquiring unit 71 determines whether to have received the display command. If, in step S45, the command acquiring unit 71 has determined not to have received the display command, the process proceeds to step S48 (described later).

If, in step S45, the command acquiring unit 71 has determined to have received the display command, in step S46, the decoding control unit 74 controls the decoder 23 and the memory 22 in order to output the picture to be displayed.

Specifically, when the frame that is commanded to be displayed is, for example, an I picture of P picture as a stored anchor frame, it is detected whether baseband image data obtained by decoding is already stored in the memory 22. If the baseband image data is stored in the memory 22, the baseband image data is output. In addition, when the frame that is commanded to be displayed is, for example, a B picture, it is detected whether reference image data necessary for decoding the B picture is stored in the memory 22. If the reference image data is stored in the memory 22, the stored reference image data is used to decode the B picture to be output.

In step S47, the decoding control unit 74 determines whether display of the frame to be displayed finishes. If, in step S47, the decoding control unit 74 has determined that display of the frame has not finished yet, the process returns to step S46 and the subsequent steps are repeated.

If, in step S45, the command acquiring unit 71 has determined not to have received the display command, or if, in step S47, the decoding control unit 74 has determined that display of the frame has finished, in step S48, by referring to the command buffer 31 of the PCI bridge 17 through the control bus 19, the command acquiring unit 71 determines whether to finish display. If, in step S48, the command acquiring unit 71 has determined not to finish the display, the process returns to step S41 and the subsequent steps are repeated. If, in step S48, the command acquiring unit 71 has determined finish the display, the process finishes.

In the above-described process, the CPU 20 controls GOP transfer from the memory 18 to the memory 22 and decoding of the decoder 23 on the basis of the control of the CPU 11. In this case, at least part of anchor frames of the GOP transferred to the memory 22 is preferentially decoded, thus improving a response from reception of the display command to output of the baseband image data obtained by decoding.

In addition, after the CPU 20 acquires a transfer-completion command for a GOP, the CPU 20 controls transfer of data of the GOP from the memory 18 to the memory 22. In other words, in the process by the CPU 11, timing for generating a transfer-completion command is behind than actual GOP-transfer timing. Thus, in random playback, in a case such as when a display start position is greatly changed, unnecessary data transfer from the memory 18 to the memory 22 is not performed. Therefore, even if a data storage size of the memory 22 is less than that of the memory 18, the memory 22 can be prevented from overflowing, and necessary data in the memory 22 can be prevented from being overwritten.

Next, the display-transfer-unit determination process that is executed in step S6 in Fig. 19 is described below with reference to the flowchart shown in Fig. 21.

In step S71, the transferring GOP determining unit 52 in the CPU 11 determines whether the frame to be displayed is one of two B pictures at the start of the GOP. If, in step S71, the transferring GOP determining unit 52 has determined that the frame to be displayed is not one of the two B pictures, the process proceeds to step S74 (described later).

If, in step S71, it is determined that the frame to be displayed is one of the two B pictures at the start of the GOP, in step S72, the transferring GOP determining unit 52 determines whether this B picture refers to a forward GOP. If, in step S72, it is determined that the B picture does not refer to the forward GOP because of reasons such as a closed GOP and a leading GOP in the stream, the process proceeds to step S74 (described later).

If, in step S72, it is determined that the forward GOP is referred to, in step S73, the transferring GOP determining unit 52 determines, whether the forward GOP, that is, a GOP, for the B picture, including forward reference images, has already been transferred. If, in step S73, it is determined that the forward GOP has not already been transferred, the process proceeds to step S76 (described later).

If, in step S71, it is determined that the frame to be displayed is not one of the two B pictures at the start of the GOP, if, in step S72, it is determined that the forward GOP is not referred to, or if, in step S73, it is determined that the forward GOP has already been transferred, in step S74, the transferring GOP determining unit 52 determines whether a GOP including the frame to be displayed has already been transferred. If, in step S74, it is determined that the GOP including the frame to be displayed has already been transferred, the process returns to step S6 in Fig. 19 and proceeds to step S7.

If, in step S74, it is determined that the GOP including the frame to be displayed has not already been transferred, in step S75, the transferring GOP determining unit 52 controls initiation of transfer of the GOP (including the frame to be displayed) from the HDD 16 to the memory 18 through the south bridge 15, the north bridge 12, the PCI bus 14, and the PCI bridge 17. The process returns to step S6 in Fig. 19 and proceeds to step S7.

If, in step S73, it is determined that the forward GOP has not already been transferred, in step S76, the transferring GOP determining unit 52 determines whether a GOP including the B picture, that is, a GOP including the frame to be displayed, has already been transferred.

If, in step S73, it is determined that the GOP including the B picture has already been transferred, in step S77, the transferring GOP determining unit 52 controls initiation of transfer of the first forward GOP from the transferred GOP from the HDD 16 to the memory 18 through the south bridge 15, the north bridge 12, the PCI bus 14, and the PCI bridge 17. The process returns to step S6 in Fig. 19 and proceeds to step S7.

If, in step S73, it is determined that the GOP including the frame to be displayed has not already been transferred, in step S78, the transferring GOP determining unit 52 controls initiation of transfer of pictures I2, B0, and B1 in the first forward GOP from the transferred GOP from the HDD 16 to the memory 18 through the south bridge 15, the north bridge 12, the PCI bus 14, and the PCI bridge 17. The process returns to step S6 in Fig. 19 and proceeds to step S7.

In a case in which, in the above-described process, a picture to be displayed is one of two B pictures at the start of a GOP, and either of a GOP including the B picture and a forward GOP (i.e., a GOP including reference image frames necessary for decoding the B picture to be displayed) from the GOP has not already been transferred, the first forward GOP from the transferred GOP and pictures I2, B0, and B1 in the GOP to be displayed are transferred. Therefore, even if the currently executed playback is high speed playback processing and the other frames in the GOP including the B picture are not displayed, unnecessary data is not transferred, and, in addition, even if, instead of the high speed playback processing, it becomes necessary to transfer the GOP including the B picture in order to display the other frames in the GOP including the B picture, the transferred data has less redundancy.

Next, the advancing-transfer-unit determination process executed in step S8 in Fig. 19 is described below with reference to the flowchart shown in Fig. 22.

In step S101, the GOP transfer timing control unit 53 determines whether the frame to be displayed is included in the same GOP including a previously displayed frame. If, in step S101, it is determined that the frame to be displayed is included the same GOP, the process returns to step S8 in Fig. 19 and proceeds to step S9.

If, in step S101, it is determined that the frame to be displayed is not included in the same GOP, that is, if it is determined that a GOP change point in the frame to be displayed is detected, in step S102, the GOP transfer timing control unit 53 determines whether the frame to be displayed is included in the first backward GOP from the GOP including the previously displayed frame, that is, whether the frame to be displayed is a GOP change point in forward playback. If, in step S102, it is determined that the frame to be displayed is not included in the first backward GOP from the GOP including the previously displayed frame, the process proceeds to step S106.

If, in step S102, it is determined that the frame to be displayed is included in the first backward GOP from the GOP including the previously displayed frame, in step S103, the GOP transfer timing control unit 53 determines whether the number of frames (in a display range) included in the first backward GOP from the GOP (whose transfer has already been initiated) including the frame to be displayed is at least six.

Although six as the number of frames is here used as a threshold value to execute determination, the number of frames differs depending on a playback capability this apparatus needs to have and the storage size of the memory 18. For example, when the memory 18 has a small storage size, if transfer is initiated too early, there is a possibility that the memory 18 may overflow. However, when the memory 18 has a sufficient memory size, the threshold value is set on the basis of the playback speed of a forward and backward playback function this apparatus has. For example, when a forward and backward playback function at approximately double speed is necessary, by using six frames as a threshold value, frames whose number is sufficient for preventing playback from freezing are transferred in advance.

If, in step S103, it is determined that the number of frames included in the first backward GOP is at least six, in step S104, the GOP transfer timing control unit 53 lowers priority than that of the GOP including the frame to be displayed or a command before initiating transfer of the first backward GOP. The process returns to step S8 in Fig. 19 and proceeds to step S9.

In other words, compared with processing for transmitting a command such as a display command, and processing for transferring a GOP that is highly likely to be played back next to a GOP including a frame being played back, processing for transferring data in advance at a GOP change point has no urgency since, in this processing, data that is likely to be next used is transferred beforehand. Thus, by setting priority, efficiency of data transfer can be increased without decreasing a response of processing (such as transmitting a command) necessary for displaying video.

If, in step S103, it is determined that the number of frames (in a display range) included in the first backward GOP is not at least six, in step S105, the GOP transfer timing control unit 53 lowers priority than that of, for example, the GOP including the frame to be displayed or a command, before initiating transfer of two GOPs, that is, the first backward GOP and the second backward GOP. The process returns to step S8 in Fig. 19 and proceeds to step S9.

If, in step S102, it is determined that the frame to be displayed is not included in the first backward GOP from the GOP including the previously displayed frame, in step S106, the GOP transfer timing control unit 53 determines whether the frame to be displayed is included in the first forward GOP from the GOP including the previously displayed frame, that is, whether the frame to be displayed is a GOP change point in reverse playback. If, in step S106, it is determined that the frame to be displayed is not included in the first forward GOP from the GOP including the previously displayed frame, high speed playback in which two or more GOPs are skipped over so as not be displayed is detected, or it is a case that the playback start position is changed by scrub playback. The process returns to step S8 in Fig. 19 and proceeds to step S9.

If, in step S106, it is determined that the frame to be displayed is included in the first forward GOP from the GOP including the previously displayed frame, in step S107, the GOP transfer timing control unit 53 determines whether the number of frames (in a display range) included in the first forward GOP from the GOP (whose transfer has already been initiated) including the frame to be displayed is at least six.

If, in step S107, it is determined that the number of frames (in the display range) included in the first forward GOP is at least six, in step S108, the GOP transfer timing control unit 53 lowers priority than that of, for example, the GOP including the frame to be displayed or a command, before initiating transfer of the first forward GOP. The process returns to step S8 in Fig. 19 and proceeds to step S9.

If, in step S107, it is determined that the number of frames (in the display range) included in the first forward GOP is not at least six, in step S109, the GOP transfer timing control unit 53 lowers priority than that of the GOP including the frame to be displayed or a command, and initiates transfer of two GOPs, that is, the first forward GOP and the second forward GOP. The process returns to step S8 in Fig. 19 and proceeds to step S9.

In this processing, with timing that a frame that is a GOP change point is displayed, transfer of a GOP predicted to be next displayed can be initiated, and, when the number of frames included in the GOP is less, transfer of another GOP can be initiated. Thus, a display response can be prevented from deteriorating due to insufficient transfer of frame data.

Next, the transfer-completion-transmission process executed in step S9 in Fig. 19 is described below with reference to the flowcharts shown in Figs. 23 to 26.

In step S131, the GOP transfer timing control unit 53 determines whether a GOP whose transfer completion has not been transmitted yet is detected. If, in step S131, it is determined that the GOP whose transfer completion has not been transmitted yet is detected, the process returns to step S9 in Fig. 19 and proceeds to step S10.

If, in step S131, it is determined that the GOP that has not transmitted transfer completion yet is detected, in step S132, on the basis of information of the GOP determined by the transferring GOP determining unit 52 to be transferred and the output range set by the output range information setting unit 54, the GOP transfer timing control unit 53 determines whether the detected GOP is next to the currently displayed frame and has a display range of less than six frames.

If, in step S132, it is determined that the detected GOP is not next to the currently displayed frame or does not have the display range of less than six frames, the process proceeds to step S136, which is described later.

If, in step S132, it is determined that the detected GOP is next to the currently displayed frame and has the display range of less than six frames, in step S133, the transfer-completion-command sending unit 56 determines whether a transfer-completion command for the detected GOP has already been transmitted. If, in step S133, it is determined that the transfer-completion command for the detected GOP has already been transmitted, the process returns to step S9 in Fig. 19 and proceeds to step S10.

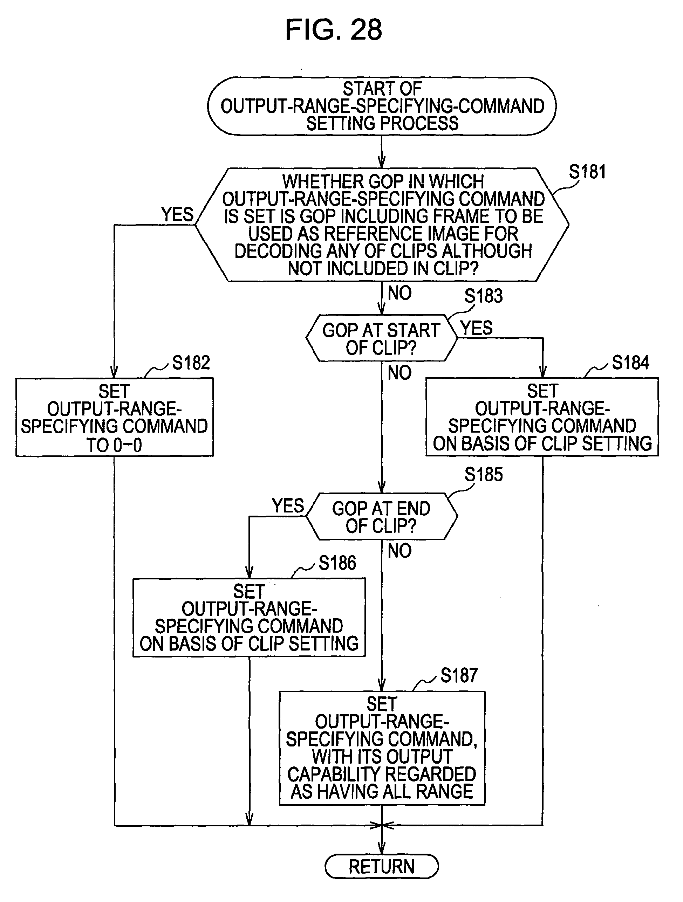

If, in step S133, it is determined that the transfer-completion command for the detected GOP has not already been transmitted, in step S134, an output-range-specifying-command setting process, which is described later with reference to Fig. 28, is executed.

In step S135, the output range information setting unit 54 transmits an output-range-specifying command of the GOP to the command buffer 31 of the PCI bridge 17, and the transfer completion command sending unit 56 transmits transfer completion of the GOP to the command buffer 31 of the PCI bridge 17. The process returns to step S9 in Fig. 19 and proceeds to step S10.

If, in step S132, it is determined that the detected GOP is not next to the currently displayed frame or does not have the display range of less than six frames, in step S136, the GOP transfer timing control unit 53 determines whether the frame to be displayed is included in the same GOP including the previously displayed frame. If, in step S136, it is determined that the frame to be displayed is not included in the same GOP including the previously displayed frame, the process proceeds to step S151, which is described later.

If, in step S136, it is determined that the frame to be displayed is included in the same GOP including the previously displayed frame, in step S137, the GOP transfer timing control unit 53 determines whether the frame to be displayed is temporally backward from the previously displayed frame. If, in step S137, it is determined that the frame to be displayed is temporally backward from the previously displayed frame, that is, it is determined that the playback direction is forward, the process proceeds to step S156, which is described later.

If, in step S137, it is determined that the frame to be displayed is not temporally backward from the previously displayed frame, that is, if it is determined that the playback direction is reverse, in step S138, the GOP transfer timing control unit 53 determines whether the frame to be displayed is positioned within five frames from the start of the GOP. If, in step S138, it is determined that the frame to be displayed is not positioned within five frames from the start of the GOP, the process returns to step S9 in Fig. 19 and proceeds to step S10.

If, in step S138, it is determined that the frame to be displayed is positioned within five frames from the start of the GOP, in step S139, the GOP transfer timing control unit 53 determines whether data of the first forward GOP from the GOP including the currently displayed frame is being transferred.

If, in step S139, it is determined that the data of the first forward GOP is being transferred, in step S140, the GOP transfer timing control unit 53 raises priority of data transfer since there is a small remaining time until issuing a command to display a frame included in the first forward GOP being transferred. The process returns to step S9 in Fig. 19 and proceeds to step S10.

If, in step S139, it is determined that the data of the first forward GOP is not being transferred, in step S141, the GOP transfer timing control unit 53 determines whether the data of the forward GOP has already been transferred.

If, in step S141, it is determined that the data of the forward GOP has not already been transferred, in step S142, the GOP transfer timing control unit 53 transfers the data of the forward GOP, with the priority raised. The process proceeds to step S146, which is described later.

If, in step S141, it is determined that the data of the forward GOP has already been transferred, in step S143, the transfer completion command sending unit 56 determines whether a transfer-completion command for the first forward GOP has already been transmitted.

If, in step S143, it is determined that the transfer-completion command for the first forward GOP has not already been transmitted, in step S144, the output-range-specifying-command setting process, which is described later with reference to Fig. 28, is executed.

In step S145, the output range information setting unit 54 transmits an output-range-specifying command for the first forward GOP to the command buffer 31 of the PCI bridge 17, and the transfer completion command sending unit 56 transmits transfer completion of the first forward GOP to the command buffer 31 of the PCI bridge 17.

In a case in which, after step S142 finishes, in step S143, it is determined that the transfer-completion command for the first forward GOP has already been transmitted, or after step S145 finishes,' in step S146, on the basis of the output range set by the output range information setting unit 54, the GOP transfer timing control unit 53 determines whether the display range of the first forward GOP is less than six frames.

If, in step S146, it is determined that the display range of the first forward GOP is not less than six frames, the process returns to step S9 in Fig. 19 and proceeds to step S10.

If, in step S146, it is determined that the display range of the first forward GOP is less than six frames, in step S147, the GOP transfer timing control unit 53 determines whether data of the second forward GOP has already been transmitted. If, in step S147, it is determined that the data of the second forward GOP has not already been transmitted, the process returns to step S9 in Fig. 19 and proceeds to step S10.

If, in step S147, it is determined that the data of the second forward GOP has already been transmitted, in step S148, the transfer completion command sending unit 56 determines whether a transfer-completion command for the second forward GOP has already been transmitted. If, in step S148, it is determined that the transfer-completion command for the second forward GOP has already been transmitted, the process returns to step S9 in Fig. 19 and proceeds to step S10.

If, in step S148, it is determined that the transfer-completion command for the second forward GOP has not already been transmitted, in step S149, the output-range-specifying-command setting process, which is described later with reference to Fig. 28, is executed.

In step S150, the output range information setting unit 54 transmits an output-range-specifying command for the second forward GOP to the command buffer 31 of the PCI bridge 17, and the transfer completion command sending unit 56 transmits transfer completion of the second forward GOP to the command buffer 31 of the PCI bridge 17. The process returns to step S9 in Fig. 19 and proceeds to step S10.

If, in step S136, it is determined that the frame to be displayed is not included in the same GOP including the previously displayed frame, in step S151, the transfer completion command sending unit 56 determines whether transfer completion of GOP including frame to be displayed has already been transmitted. If, in step S151, it is determined that the transfer completion of GOP including frame to be displayed has already been transmitted, the process returns to step S9 in Fig. 19 and proceeds to step S10.

If, in step S151, it is determined that the transfer completion of GOP including frame to be displayed has not already been transmitted, in step S152, the GOP transfer timing control unit 53 determines whether the GOP including frame to be displayed has already been transferred.

If, in step S152, it is determined that the GOP including frame to be displayed has not already been transferred, in step S153, the GOP transfer timing control unit 53 raises the priority before awaiting transfer completion of the GOP including the frame to be displayed.

If, in step S152, it is determined that the GOP including frame to be displayed has already been transferred, or after step S153 finishes, that is, when transfer of the frame to be displayed is completed and a transfer completion command has not been transmitted yet, in step S154, the output-range-specifying-command setting process, which is described later with reference to Fig. 28, is executed.

In step S155, the transfer completion command sending unit 56 transmits an output-range-specifying command and the transfer completion of the GOP including the frame to be displayed. The process returns to step S9 and proceeds to step S10.

If, in step S137, it is determined that the frame to be displayed is temporally backward from the previously displayed frame, that is, when the playback direction is forward, in step S156, the GOP transfer timing control unit 53 determines whether the frame to be displayed is positioned within five frames from the end of the GOP. If, in step S156, it is determined that the frame to be displayed is not positioned within five frames from the end of the GOP, the process returns to step S9 in Fig. 19 and proceeds to step S10.

If, in step S156, it is determined that the frame to be displayed is positioned within five frames from the end of the GOP, in step S157, the GOP transfer timing control unit 53 determines whether the data of first backward GOP is being transferred.

If, in step S157, it is determined that the data of first backward GOP is being transferred, in step S158, the GOP transfer timing control unit 53 raises the priority of data transfer since there is a small remaining time until issuing a command to display a frame included in the first backward GOP being transferred. The process returns to step S9 in Fig. 19 and proceeds to step S10.

If, in step S157, it is determined that the data of first backward GOP is not being transferred, in step S159, the GOP transfer timing control unit 53 determines whether the data of the first backward GOP has already been transferred.

If, in step S159, it is determined that the data of the first backward GOP has not already been transferred, in step S160, the GOP transfer timing control unit 53 transfers the first backward GOP, with the transfer priority raised. The process proceeds to step S164, which is described later.

If, in step S159, it is determined that the data of the first backward GOP has already been transferred, in step S161, the transfer completion command sending unit 56 determines whether a transfer-completion command for the first backward GOP has already been transmitted.

If, in step S161, it is determined that the transfer-completion command for the first backward GOP has not already been transmitted, in step S162, the output-range-specifying-command setting process, which is described later with reference to Fig. 28, is executed.

In step S163, the output range information setting unit 54 transmits an output-range-specifying command for the first backward GOP to the command buffer 31 of the PCI bridge 17, and the transfer completion command sending unit 56 transmits transfer completion of the first backward GOP to the command buffer 31 of the PCI bridge 17.

In a case in which, after step S160 finishes, in step S161, it is determined that the transfer-completion command for the first backward GOP has already been transmitted, or after step S163 finishes, in step S164, on the basis of the output range set by the output range information setting unit 54, the GOP transfer timing control unit 53 determines whether the display range of the first backward GOP is within six frames.

If, in step S164, it is determined that the display range of the first backward GOP is not within six frames, the process returns to step S9 in Fig. 19 and proceeds to step S10.

If, in step S164, it is determined that the display range of the first backward GOP is within six frames, in step S165, the GOP transfer timing control unit 53 determines whether data of the second backward GOP has already been transferred. If, in step S165, it is determined that the data of the second backward GOP has not already been transferred, the process returns to step S9 in Fig. 19 and proceeds to step S10.

If, in step S165, it is determined that the data of the second backward GOP has already been transferred, in step S166, the transfer completion command sending unit 56 determines whether a transfer-completion command for the second backward GOP has already been transmitted. If, in step S166, it is determined that a transfer-completion command for the second backward GOP has already been transmitted, the process returns to step S9 in Fig. 19 and proceeds to step S10.

If, in step S166, it is determined that the transfer-completion command for the second backward GOP has not already been transmitted, in step S167, the output-range-specifying-command setting process, which is described later with reference to Fig. 28, is executed.

In step S168, the output range information setting unit 54 transmits transfer completion of the second backward GOP and an output-range-specifying command to the command buffer 31 of the PCI bridge 17, and the transfer completion command sending unit 56 transmits transfer completion of the second backward GOP to the command buffer 31 of the PCI bridge 17. The process returns to step S9 in Fig. 19 and proceeds to step S10.

In the above-described process, in a case in which, in forward display, a frame to be displayed is within five frames from the end of a GOP, and, in a case in which, in reverse display, a frame to be displayed is within five frames from the start of a GOP, at a GOP change point of the frame to be displayed, it is determined whether transfer of a GOP whose transfer is initiated in advance and which is predicted to be next displayed has already been completed. If the transfer has not been completed yet, transfer priority is raised, and, when the transfer has been completed, a transfer-completion command and an output-range-specifying command are transmitted.

This can prevent unnecessary data transfer from the memory 18 to the memory, for example, in a case in which, in random playback, a display start position is greatly changed. Therefore, even if the data storage size of the memory 22 is less than that of the memory 18, the memory 22 can be prevented from overflowing and necessary data can be prevented from being overwritten.

In addition, when transfer of a GOP including a frame to be displayed has not been finished yet, priority of transfer of the GOP is raised.

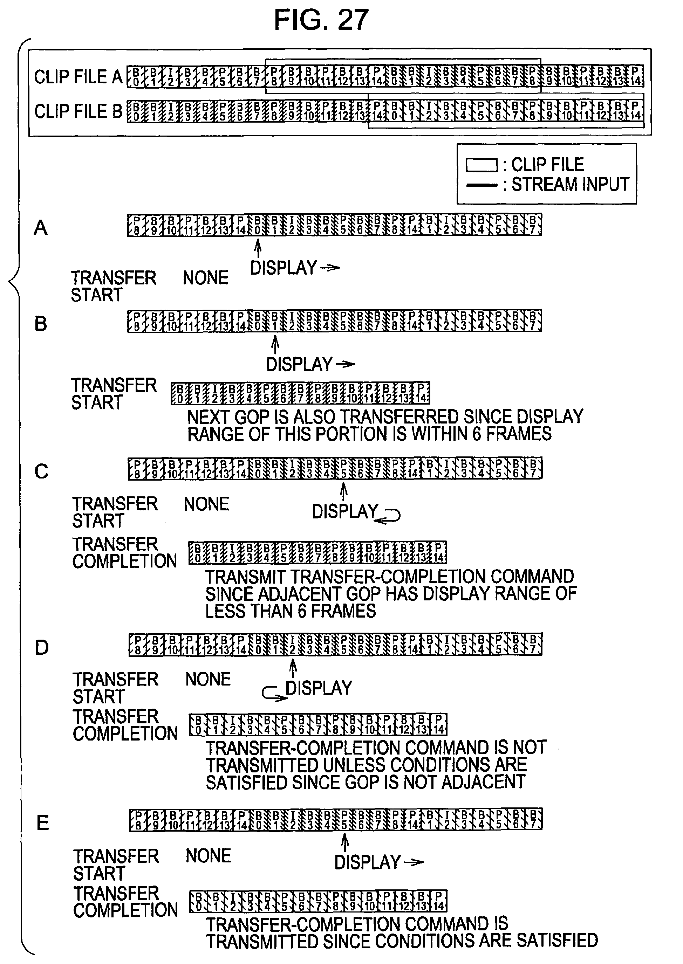

Fig. 27 illustrates examples of timing control of command transmission or the like in a case in which transient playback is executed in clip playback in which clip file A and clip file B are consecutively played back. Clip file A is formed by selecting picture P8 in a GOP including a first stream to picture P8 in the next GOP. Clip' file B is formed by selecting picture P14 in a GOP including a second stream to picture P14 in the next GOP.

As shown in, for example, part A of Fig. 27, frames to be displayed flow in the forward direction, and, when the frames to be displayed change from the first GOP to second GOP in clip file A, it is determined whether the third GOP is being transferred or has already been transferred. If the third GOP is not being transferred or has not already been transferred, the third GOP is commanded to be transferred.

As shown in part B of Fig. 27, the next GOP, that is, the first GOP in clip file B, is transferred. A display range of this GOP is only picture P14, and the display range is within six frames. Thus, a further next GOP, that is, the second GOP in clip file B, is also transferred, following the first GOP.

As shown in part C of Fig. 27, when transfer of the first GOP in clip file B is completed while a frame included in the second GOP in clip file A is being displayed, the GOP whose transfer is completed is adjacent to a GOP including a currently displayed frame and the display range is less than six frames. Thus, a transfer-completion command is transmitted. After that, from the state shown in part C of Fig. 27, the display playback direction is reversed fro reverse playback.

In a case in which, at the time the transfer of the second GOP in clip file B has finished, reverse playback is on, as shown in part D of Fig. 27, and a frame included in the second GOP in clip file A is being displayed, the GOP whose transfer is completed is not adjacent to the GOP including the currently displayed frame. Thus, a transfer-completion command is not transmitted yet. After that, from the state shown in part D of Fig. 27, the display playback direction is reversed for forward playback again.

As shown in part E of Fig. 27, in the case of satisfying the condition that, in forward playback, a currently displayed frame is within five frames from the end of a GOP including the currently displayed frame, a display range of the next GOP is within six frames, and transfer of the second backward GOP is completed, a transfer-completion command for the second GOP in clip file B is transmitted.

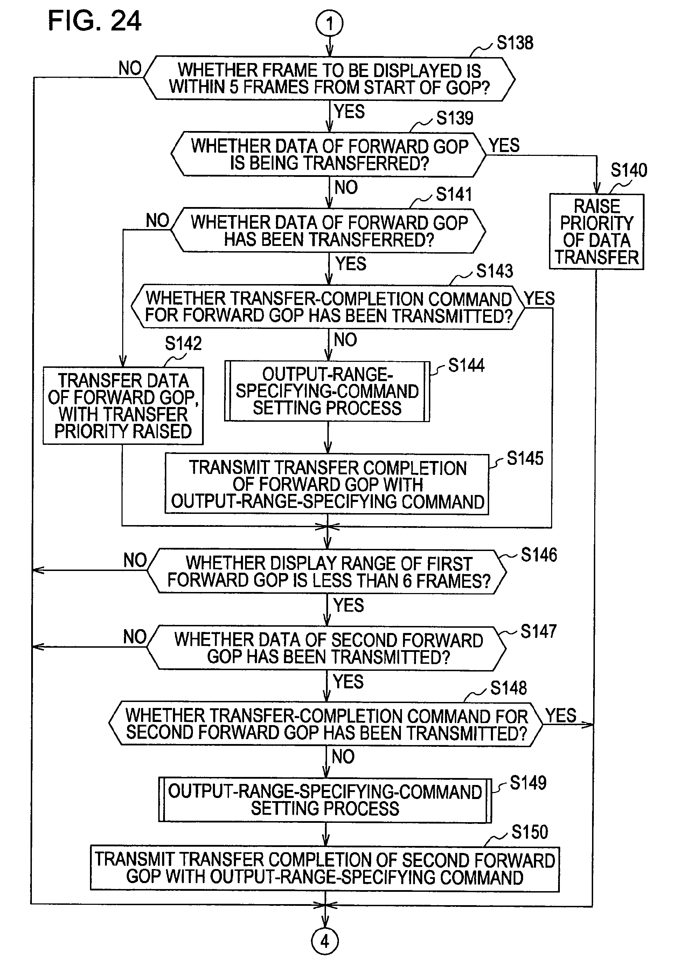

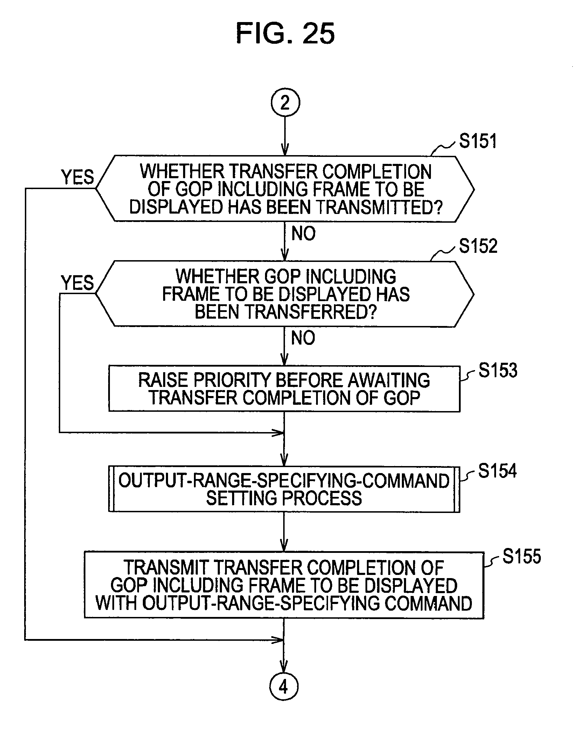

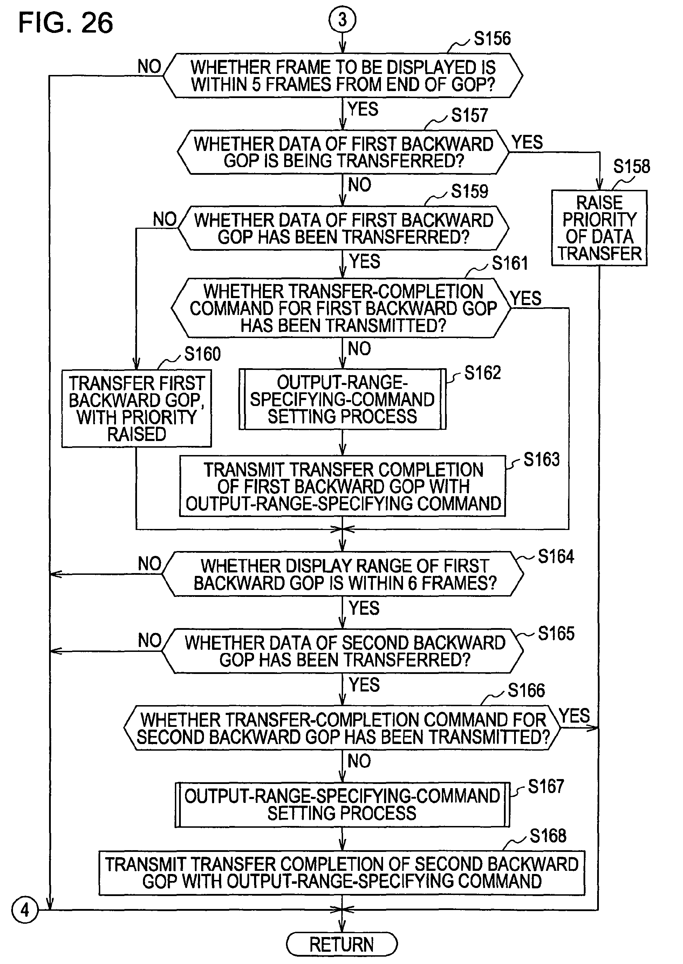

Next, the output-range-specifying-command setting process, executed in each of step S134 in Fig. 23, steps S144 and S149 in Fig. 24, step S154 in Fig. 25, and steps S162 and S167 in Fig. 26, is described below with reference to the flowchart shown in Fig. 28.

In step S181, the output range information setting unit 54 determines whether the GOP for which an output-range-specifying command is set includes a frame used as a reference image for clip decoding although the frame is not included in the clip.

If, in step S181, it is determined that the GOP for which an output-range-specifying command is set includes the frame used as the reference image for clip decoding although the frame is not included in the clip, in step S182, the output range information setting unit 54 sets the output-range-specifying command to 0-0. The process returns to the transfer-completion-transmission determination process described with reference to Figs. 23 to 26. Specifically, the process returns to step S134 in Fig. 23 and proceeds to step S135. The process returns to step S144 in Fig. 24 and proceeds to step S145, or returns to step S149 and proceeds to step S150. The process returns to step S154 in Fig. 25 and proceeds to step S155. The process returns to step S162 in Fig. 26 and proceeds to step S163. The process returns to step S167 and proceeds to step S168 (the following description can apply to the output-range-specifying-command setting process shown in Fig. 28).

If, in step S181, it is determined that the GOP for which the output-range-specifying command is set includes the frame, in step S183, the output range information setting unit 54 determines whether the GOP for which the output-range-specifying command is set is at the start of the clip.

If, in step S183, it is determined that the GOP for which the output-range-specifying command is set is at the start of the clip, in step S184, on the basis of the clip setting, the output range information setting unit 54 sets the output-range-specifying command to a range such as 7-15 or 9-15. The process returns to the transfer-completion-transmission determination process described with reference to Figs. 23 to 26.

If, in step S183, it is determined that the GOP for which the output-range-specifying command is set is not at the start of the clip, in step S185, the output range information setting unit 54 determines whether the GOP for which the output-range-specifying command is set is at the end of the clip.

If, in step S185, it is determined that the GOP for which the output-range-specifying command is set is at the end of the clip, in step S186, on the basis of the clip setting, the output range information setting unit 54 sets the output-range-specifying command to a range such as 0-4 or 0-11. The process returns to the transfer-completion-transmission determination process described with reference to Figs. 23 to 26.

If, in step S185, it is determined that the output-range-specifying command is set is not at the end of the clip, in step S187, the output range information setting unit 54 sets the output-range-specifying command, with its output capability regarded as all range. The process returns to the transfer-completion-transmission determination process described with reference to Figs. 23 to 26.

Since the above-described process sets and transmits an output-range-specifying command, even if an anchor frame in a GOP which is transferred for use as a reference image although the frame is not included in a clip is a stored anchor frame, overwriting is possible in the stored anchor frame, and the number of GOPs capable of processing and having equal numbers of stored anchor banks can be increased.

By performing the above-described processing, scrub playback in playing back clips and forward/reverse frame-advance playback can be easily controlled at high speed.

In other words, the control is simplified because determination of a transfer unit for GOP transfer and control of transfer timing are not complicated, and data transfer is prevented from having redundancy due to a reason such as double transmission of identical data.

A case in which MPEG is used as CODEC processing has been exemplified. However, obviously, the present invention is applicable to a case in which CODEC processing using frame correlation is performed. For example, the present invention is applicable to AVC/H.264 (Advanced Video Coding/H.264), etc.

A B picture in AVC/H.264 may not use bidirectional (forward and backward) reference images. Prediction may be performed by using two reference images in the past, and prediction may be performed by using two reference images in the future. Considering this case, an embodiment of the present invention can be applied.

In the foregoing description, the CPUs 11 and 20 exchange control information through the command buffer 31 and result buffer 32 in the PCI bridge 17 and share control. However, for example, such processing may be executed by a single CPU.

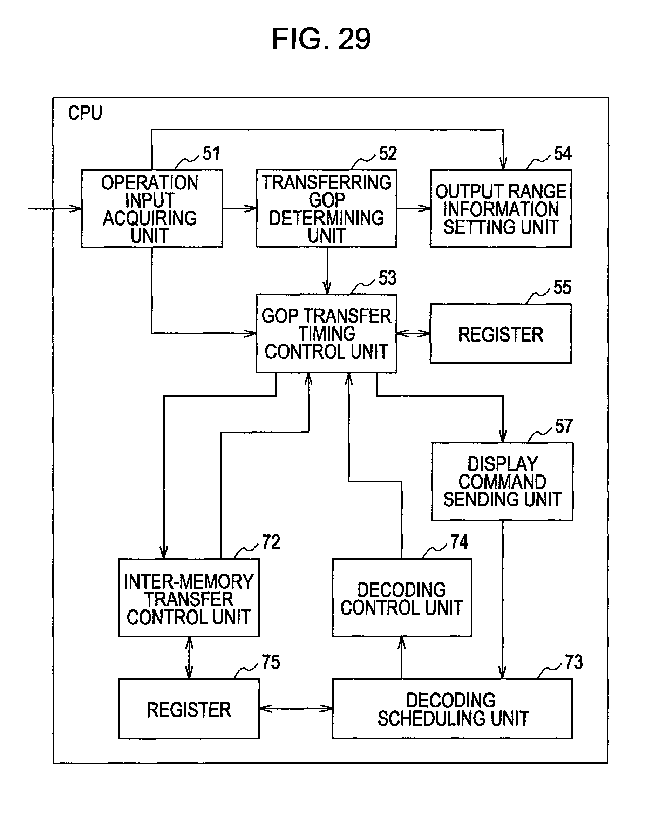

In this case, as shown by the functional block diagram of Fig. 29, the functions of the CPU are basically similar to the operation input acquiring unit 51, the transferring GOP determining unit 52, the GOP transfer timing control unit 53, the output range information setting unit 54, the register 55, the display command sending unit 57, the inter-memory transfer control unit 72, the decoding scheduling unit 73, the decoding control unit 74, and the register 75, which are described with reference to Fig. 5.

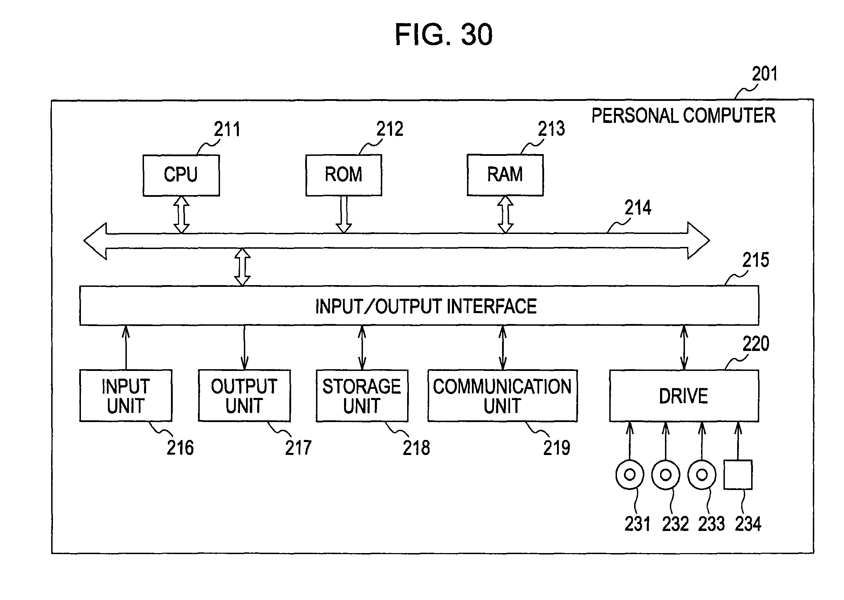

The above-described consecutive processing may be executed by software. The software is installed from a recording medium into a computer in which programs constituting the software are embedded in dedicated hardware, or, for example, a multipurpose personal computer system that can execute various functions by installing various programs into the system. In this case, the foregoing processing is executed by the personal computer shown in Fig. 30.

Referring to Fig. 30, a CPU 201 executes various processes in accordance with a program stored in a ROM (read-only memory) 212 or a program loaded from a storage unit 218 into a RAM (random access memory) 213. The RAM 213 also stored data or the like that is necessary for the CPU 211 to execute various processes, if necessary.

The CPU 211, the ROM 212, and the RAM 213 are connected to one another by an internal bus 214. The internal bus 214 connects to an input/output interface 215.

The input/output interface 215 connects to an input unit 216 including a keyboard and a mouse, an output unit 217 including a display formed by a cathode-ray tube or liquid crystal display, and a speaker, a storage unit 218 including a hard disk, and a communication unit 219 including a modem and a terminal adapter. The communication unit 219 performs communicating processing using various networks including a telephone line and a CATV (community antenna television).

The input/output interface 215 also connects to a drive 220, if necessary. A magnetic disk 231 (including a flexible disk), an optical disc 232 (including a CD-ROM (compact-disc read-only memory) and a DVD (digital versatile disc)), a magneto-optical disc 233 (including a MiniDisk), or a semiconductor memory 234, is loaded into the drive 220, if necessary. A computer program is read from the medium and is installed into the storage unit 218, if necessary.

When software is used to execute the above-described consecutive processing, a program included in the software is installed from a network or a recording medium.

As shown in Fig. 30, this recording medium includes a program-recorded package medium which is distributed in order to provide a program to the user separately from the computer and which includes the magnetic disk 231, the optical disc 232, the magneto-optical disc 233, or the semiconductor memory 234.

In addition, in this specification, the steps constituting the program recorded on the recording medium include not only steps that are executed in a time-series manner in given order, but also steps which are executed in parallel or separately if they may not be executed in a time-series manner.

The above-described embodiment describes a case in which compressed stream data is stored in the HDD 16. However, an embodiment of the present invention is not limited to such a case and can be applied to even the case of decoding stream data recorded in each of recording media such as an optical disc, a magneto-optical disc, a semiconductor memory, or a magnetic disk.

In this specification, the system represents the entirety of an apparatus including a plurality of devices.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software- controlled data processing apparatus, it will be appreciated that a computer program providing such software control and a transmission, storage or other medium by which such a computer program is provided are envisaged as aspects of the present invention.

## Claims

1. An information processing apparatus for controlling first and second coded streams to be output in a form in which the first and second coded streams are connected to each other, the information processing apparatus comprising:
operation-input acquiring means for acquiring an operation input representing a playback portion of the first and second coded streams to be played back;
storage means for storing coded streams including the first and second coded streams;
transfer-control means for controlling transfer, to the storage means, of portions of the first and second coded streams for the operation input acquired by the operation-input acquiring means, a coded stream necessary for decoding the portions of the first and second coded streams for the acquired operation input;
decoding means for decoding the first and second coded streams stored in the storage means to generate image data; and
commanding means for commanding an image-data output time at which the image data generated by the decoding means is output.

2. The information processing apparatus further comprising control-information generating means for generating control information representing the playback portion of the first and second coded streams on the basis of the operation input acquired by the operation-input acquiring means.

3. The information processing apparatus according to Claim 2, wherein:
each of the first and second coded streams includes groups of pictures; and
the transfer-control means controls the transfer of the first and second coded streams in units of groups of pictures.

4. The information processing apparatus according to Claim 1, further comprising:
transfer-timing control means for controlling transfer timing by predicting the image-data output time commanded by the commanding means so that the first and second coded streams are transferred prior to the commanding of the image-data output time; and
decoding control means for controlling the decoding means to preferentially decode a reference picture that is referred to when, in the first and second coded streams stored in the storage means, a picture to be decoded is decoded.

5. The information processing apparatus according to Claim 4, wherein:
the transfer control means controls the transfer of the first and second coded streams so that the first and second coded streams are transferred as transfer data in predetermined transfer units to the storage means; and
when the number of pictures to be displayed in the transfer data whose transfer to the storage means is controlled is not greater than a predetermined number of pictures, the transfer-timing control means controls the transfer timing so that next transfer data is transferred to the storage means.

6. The information processing apparatus according to Claim 1, wherein the transfer-timing control means determines transfer units in which the first and second coded streams are transferred to the storage means.

7. The information processing apparatus according to Claim 6, wherein:
each of the first and second coded streams includes groups of pictures including B pictures; and
when a picture based on the image data whose output time is commanded by the commanding means is included in a B picture that is decoded by referring to a picture included in a second group of pictures different from a first group of pictures including the picture based on the image data, the transfer control means determines, as transfer units for transfer to the storage means, a B picture that is decoded by referring to a picture included in the second group of pictures, a reference picture necessary for decoding the B picture, and the second group of pictures, the B picture and reference picture being included in the first group of pictures.

8. The information processing apparatus according to Claim 7, wherein, when the picture based on the image data whose output time is commanded by the commanding means is included in the B picture that is decoded by referring to the picture included in the second group of pictures different from the first group of pictures including the picture based on the image data, and each of the first group of pictures and the second group of pictures is not supplied to the storage means, the transfer control means determines, as the transfer units for transfer to the storage means, a B picture that is decoded by referring to a picture included in the second group of pictures, a reference picture necessary for decoding the B picture, and the second group of pictures, the B picture and reference picture being included in the first group of pictures.

9. The information processing apparatus according to Claim 1, wherein the first and second coded streams are streams encoded on the basis of a Moving Picture Experts Group standard.

10. An information processing method for controlling first and second coded streams to be output in a form in which the first and second coded streams are connected to each other, the information processing method comprising the steps of:
acquiring an operation input representing a playback portion of the first and second coded streams to be played back;
storing coded streams including the first and second coded streams;
controlling transfer, to storage means, of portions of the first and second coded streams for the acquired operation input, and a coded stream necessary for decoding the portions of the first and second coded streams for the acquired operation input;
generating image data by decoding the first and second coded streams stored; and
commanding an image-data output time at which the generated image data is output.

11. An information processing apparatus for controlling first and second coded streams to be output in a form in which the first and second coded streams are connected to each other, the information processing apparatus comprising:
an operation-input acquiring unit acquiring an operation input representing a playback portion of the first and second coded streams to be played back;
a storage unit storing coded streams including the first and second coded streams;
a transfer-control unit controlling transfer, to the storage unit, of portions of the first and second coded streams for the operation input acquired by the operation-input acquiring unit, a coded stream necessary for decoding the portions of the first and second coded streams for the acquired operation input;
a decoding unit decoding the first and second coded streams stored in the storage unit to generate image data; and
a commanding unit commanding an image-data output time at which the image data generated by the decoding unit is output.
